# EUROPEAN PATENT APPLICATION

(11) **EP 1 231 556 A1**
(43) Date of publication of application: **14.08.2002**
(21) Application number: 02002629.0
(22) Date of filing: 05.02.2002
(51) Int. Cl.: G06F 17/60

(54) **Data transmission system**

(30) Priority: 09.02.2001 JP 2001034415
(71) Applicant: MATSUSHITA ELECTRIC INDUSTRIAL CO., LTD., Kadoma-shi, Osaka-fu (JP)
(72) Inventor: Sakamoto, Kiyomi, Ikoma-shi, Nara-Ken (JP); Hamada, Hiroyuki, Yawata-shi, kyoto-fu (JP); Ata, Teruaki, Osaka-shi, Osaka-fu (JP); Yamashita, Atsushi, Osaka-shi, Osaka-fu (JP)
(74) Representative: Gassner, Wolfgang, Dr.

(57) **Abstract**

Data terminal equipment (3₁) receives a bonus-attached file including a shop bonus provided to a user, and a bonus identifier for uniquely identifying the bonus, and stores the bonus identifier included in the bonus-attached file. Data terminal equipment (2₁) previously stores another bonus identifier for uniquely identifying the bonus provided to the user of the data terminal equipment (3₁). Through data communications with the data terminal equipment (3₁), the data terminal equipment (2₁) requests the bonus identifier on the data terminal equipment (3₁) side. If determining that the bonus identifier received from the data terminal equipment (3₁) is as being the same as the data identifier stored therein, the data terminal equipment (2₁) provides the bonus specified by the bonus identifier to the user of the data terminal equipment (3₁). In such a manner, the data transmission system is improved in user's usability with no more need for printing coupons.

## Description

### BACKGROUND OF THE INVENTION

### Field of the Invention

The present invention relates to data transmission systems and, more specifically, to a data transmission system in which a server transmits files for details of shops and/or services, typically restaurants, to a potential customer's data terminal equipment.

### Description of the Background Art

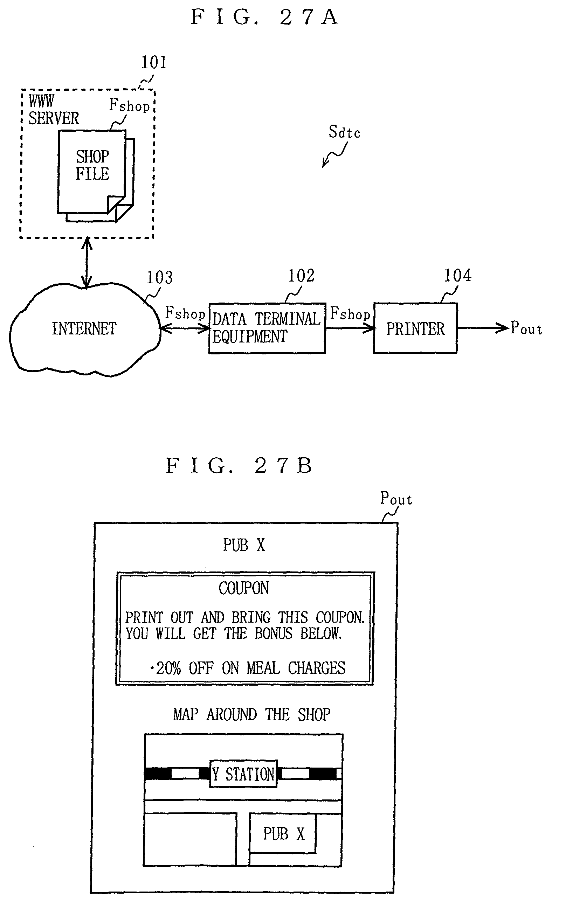

In recent years, the above type of data transmission system has been realized using the Internet technology. FIG. 27A is a block diagram showing a conventional data transmission system *Sdtc.* In the data transmission system *Sdtc,* a WWW server 101 and data terminal equipment 102 are connected to each other via the Internet 103 for data communications therebetween. To the data terminal equipment 102, a printer 104 is connected.

The WWW server 101 stores several of a shop file *Fshop,* which is basically data about shop details and/or services (hereinafter, simply shop details) including a bonus coupon (see FIG. 27B) designed as the shop's owner wants. This bonus coupon is typically a discount coupon on meal charges.

The data terminal equipment 102 accesses the WWW server 101 through the Internet 103 responding to a user's operation, and retrieves the shop file *Fshop* designated by the user. The data terminal equipment 102 then displays on its screen the shop details in the shop file *Fshop.* By referring to the displayed shop details including coupon, if the user decides to go to the shop and wants to get the bonus offered by the coupon, he or she instructs the data terminal equipment 102 to print out the coupon. Responding to such an instruction, the shop file *Fshop* is transferred from the data terminal equipment 102 to the corresponding printer 104. The printer 104 then responsively prints out on paper the contents of the shop file *Fshop,* and resultantly outputted is a printed material *Pout* on which at least the coupon is printed as shown in FIG. 27B. The user brings the printed material *Pout* to the corresponding shop, and hands it to anyone working at the shop. It is not until that the user is entitled to receive the bonus.

The problem here is that, in such a data transmission system *Sdtc,* the user has to bother to print out any coupon whichever he or she wants, and bring it to the corresponding shop. Therefore, in terms of usability, the data transmission system *Sdtc* is not user friendly.

### SUMMARY OF THE INVENTION

Therefore, an object of the present invention is to provide a data transmission system which can offer better usability.

The present invention has the following features to attain the object above.

A first aspect of the present invention is directed to a data transmission system in which data communications is performed between first data terminal equipment placed on a bonus awarding side, and second data terminal equipment used by a user who is entitled to receive the bonus. The first data terminal equipment comprises a first bonus identifier storage for storing, as an internal bonus identifier, a bonus identifier provided to uniquely identify the bonus awarded to the second data terminal equipment. The second data terminal equipment comprises a bonus-attached file requesting part for requesting a bonus-attached file which is for the bonus, and including a bonus identifier which uniquely identifies the bonus; and a second bonus identifier storage for storing, as an external bonus identifier, the bonus identifier included in the bonus-attached file requested by the bonus-attached file requesting part. The first data terminal equipment further comprises a bonus identifier requesting part for requesting, through data communications with the second data terminal equipment, the external bonus identifier stored in the second bonus identifier storage; a determination part for determining whether or not the external bonus identifier requested by the bonus-identifier requesting part is the same as the internal bonus identifier stored in the first bonus identifier storage; and a bonus awarding part for providing, when the determination part determines that the external bonus identifier as being the same as the internal bonus identifier, the second data terminal equipment with the bonus specified by the internal bonus identifier.

The second aspect of the present invention is directed to data terminal equipment connected with external data terminal equipment placed on a bonus awarding side for communications therewith, and used by a user who is entitled to receive the bonus . The external data terminal equipment stores, as an external bonus identifier, a bonus identifier provided to uniquely identify the bonus awarded to the data terminal equipment. The data terminal equipment comprises: a bonus-attached file requesting part for requesting a bonus-attached file which is for the bonus, and including a bonus identifier which uniquely identifies the bonus; and a bonus identifier storage for storing, as an internal bonus identifier, the bonus identifier included in the bonus-attached file requested by the bonus-attached file requesting part. The external data terminal equipment requests, through data communications with the second data terminal equipment, the internal bonus identifier stored in the second bonus identifier storage; determines whether or not the internal bonus identifier requested by the bonus-identifier requesting part is the same as the external bonus identifier stored in itself, and provides, when the internal bonus identifier is determined as being the same as the external bonus identifier, the data terminal equipment with the bonus specified by the internal bonus identifier.

A third aspect of the present invention is directed to data terminal equipment connected with external data terminal equipment used by a user who is entitled to receive the bonus for data communications therewith. The data terminal equipment comprises a bonus identifier storage for storing, as an internal bonus identifier, a bonus identifier provided to uniquely identify the bonus awarded to the external data terminal equipment. The external data terminal equipment requests for a bonus-attached file which is for the bonus, and including a bonus identifier which uniquely identifies the bonus, and stores, as an external bonus identifier, the bonus identifier included in the requested bonus-attached file. The data terminal equipment further comprises: a bonus identifier requesting part for requesting the external bonus identifier stored in the external bonus identifier storage; a determination part for determining whether or not the external bonus identifier requested by the bonus-identifier requesting part is the same as the internal bonus identifier stored in the first bonus identifier storage; and a bonus awarding part for providing, when the determination part determines that the external bonus identifier as being the same as the internal bonus identifier, the external data terminal equipment with the bonus specified by the internal bonus identifier.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a data transmission system *Sdt*₁ according to a first embodiment of the present invention, or as its modified example, of a data transmission system *Sdt*₁';
FIG. 2 is a block diagram showing the structure of a WWW server 1₁ of FIG. 1;
FIGS. 3A and 3B are schematic illustrations, respectively, of form data *Dform1* and a bonus-attached file *Fbonus1* to be used in the data transmission system *Sdt*₁ of FIG. 1;
FIG. 4 is a block diagram showing the structure of data terminal equipment 2₁ of FIG. 1;
FIG. 5 is a block diagram showing the structure of data terminal equipment 3₁ of FIG. 1;
FIG. 6 is a sequence chart for data communications between the WWW server 1₁ and the data terminal equipment 2₁ of FIG. 1;
FIG. 7 is a sequence chart for data communications between the WWW server 1₁ and the data terminal equipment 3₁ of FIG. 1;
FIG. 8 is a sequence chart for data communications between the WWW server 2₁ and the data terminal equipment 3₁ of FIG. 1;
FIG. 9 is a schematic exemplary illustration specifically showing items *ITname, ITinfo, ITcob,* and *ITiob* shown in FIG. 3A;
FIG. 10 is a sequence chart for data communications between the WWW server 1₁ and the data terminal equipment 2₁ in the data transmission system *Sdt*₁' of FIG. 1;
FIG. 11 is a block diagram showing the structure of a data transmission system *Sdt*₂ according to a second embodiment of the present invention;
FIG. 12 is a block diagram showing the structure of data terminal equipment 2₂ of FIG. 11;
FIG. 13 is a block diagram showing the structure of data terminal equipment 3₂ of FIG. 11;
FIG. 14A is a block diagram showing the structure of a center station 6₂ of FIG. 11, and FIG. 14B is a schematic illustration showing the detailed structure of a personal database *DBuser* of FIG. 14A;
FIG. 15 is a sequence chart for data communications between the data terminal equipment 2₂ and the data terminal equipment 3₂ of FIG. 11;
FIG. 16 is a sequence chart for data communications between the data terminal equipment 2₂ and the center station 6₂ of FIG. 11;
FIG. 17 is a block diagram showing the structure of a data transmission system *Sdt*₃ according to a third embodiment of the present invention;
FIG. 18 is a block diagram showing the structure of a WWW server 1₃ of FIG. 17;
FIG. 19A is a schematic illustration of an input form *Fin3* represented by form data *Dform3* of FIG. 18, and FIG. 19B is a schematic illustration showing an input example of items *ITname, ITaddr,* and *ITnote* shown in FIG. 19A;
FIGS. 20A and 20B are schematic illustrations, respectively, of shop details *INshop3* in a bonus-attached file *Fbonus3* of FIG. 18, and the data structure of the bonus-attached file *Fbonus3;*
FIGS. 21A and 21B show, respectively, a conversion table *Tconv31* of FIG. 18 and a conversion table *Tconv32* of FIG. 22;
FIG. 22 is a block diagram showing the structure of data terminal equipment 3₃ of FIG. 17;
FIG. 23 is a sequence chart for data communications between the WWW server 1₃ and the data terminal equipment 2₁ of FIG. 17;
FIG. 24 is a sequence chart for data communications between the WWW server 1₃ and the data terminal equipment 3₃ of FIG. 17;
FIG. 25 is a flowchart of the detailed procedure of sequence SQ59 of FIG. 24;
FIG. 26 is a flowchart of the detailed procedure of sequence SQ60 of FIG. 24; and
FIGS. 27A and 27B are illustrations for describing a conventional data transmission system *Sdtc.*

### DESCRIPTION OF THE PREFERRED EMBODIMENTS

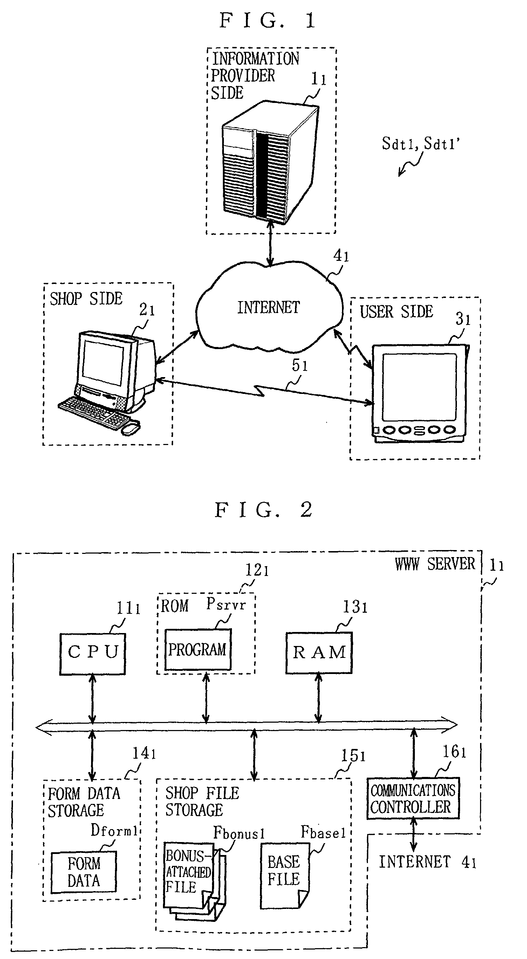

FIG. 1 is a block diagram showing the structure of a data transmission system *Sdt*₁ according to a first embodiment of the present invention. The data transmission system *Sdt*₁ roughly includes a WWW (World Wide Web) server 1₁, data terminal equipment 2₁, and data terminal equipment 3₁. Herein, the WWW server 1₁, and the data terminal equipment 2₁ and 3₁ are so structured as to be accessible to the Internet 4₁. With such a structure, at least the WWW server 1₁ can perform data communications with the data terminal equipment 2₁ and 3₁ over the Internet 4₁. Moreover, the data terminal equipment 2₁ and 3₁ can perform data communications therebetween over a wireless transmission path 5₁.

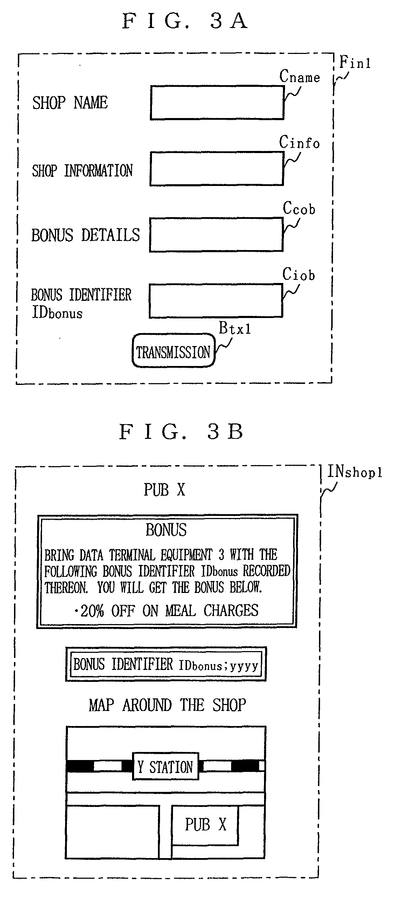

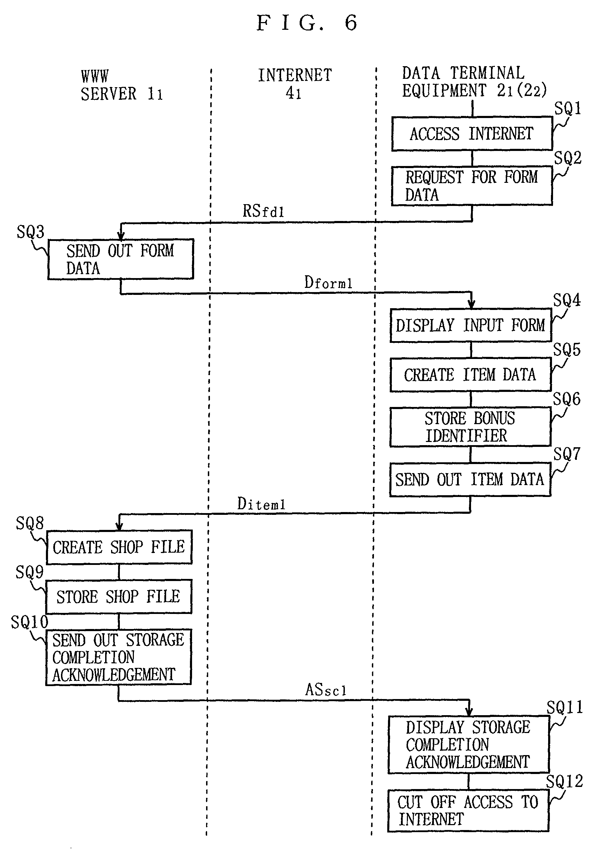

The WWW server 1₁ is managed by an information provider, who stores a bonus-attached file *Fbonus1* (see FIG. 3B) in the WWW server 1₁ responding to a request from the shop, and by using the bonus-attached file *Fnonus1,* provides the shop details to the user. The WWW server 1₁ includes, as shown in FIG. 2, a CPU (Central Processing Unit) 11₁, ROM (Read Only Memory) 12₁, RAM (Random Access Memory) 13₁, a form data storage 14₁, a bonus-attached file storage 15₁, and a communications controller 16₁. The CPU 11₁ goes through various processes by following a computer program (hereinafter, simply refers to as a program) *Psrvr* which is previously recorded on the ROM 12₁. When executing the program *Psrvr,* the CPU 11₁ uses the RAM 13₁ as a working area. The form data storage 14₁ is typically composed of a hard disk drive, and stores form data *Dform1* (see FIG. 3A) in a storage location specified by a predetermined first URL (Uniform Resource Locator) . The bonus-attached file storage 15₁ stores a bonus-attached file *Fbonus1* (see FIG. 3B) in a storage location specified by a predetermined second URL. The bonus-attached file storage 15₁ also stores a base file *Fbase1* in a predetermined storage location. The base file *Fbase1* represents the background of the bonus-attached file *Fbonus1,* and is used when the WWW server 1₁ creates the bonus-attached file *Fbonus1* (see sequence SQ8 of FIG. 6). Here, the base file *Fbase1* is used only by the WWW server 1₁, and thus there is no need to assign a URL to indicate where the base file *Fbase1* has been stored. In accordance with the Internet protocol, the communications controller 16₁ sends out various data transferred from the RAM 13₁ to the Internet 4₁, or receives various data transmitted over the Internet 4₁ and transfers the data to the RAM 13₁.

Described now are the above described form data *Dform1* and the bonus-attached file *Fbonus1.* With the form data *Dform1*, such an input form *Fin1* as shown in FIG. 3A can be displayed at least by the data terminal equipment 2₁. The input form *Fin1* is so structured as to allow someone working in the shop (typically shopkeeper or his or her employees) using the data terminal equipment 2₁ to fill out items *IT,* which are needed to create the bonus-attached file *Fbonus1*. In the below, anyone working in the shop is simply referred to as a shopkeeper for convenience. As to the items *IT,* to be filled out in the present embodiment are four of those *ITname, ITinfo, ITcob,* and *ITiob* selected by the information provider. Specifically, the item *ITname* is a shop name, and the item *ITinfo* is shop information, including a shop address, a phone number, or a map around the shop, or at least two of those. The item *ITcob* is details of a bonus, which denotes herein a merit awarded specially to the user who becomes the customer of the shop. The item *ITiob* is a bonus identifier *IDbonus* for uniquely identifying the bonus. With these four items *IT* selected, the input form *Fin1* is structured by four input columns *Cname, Cinfo, Ccob,* and *Ciob*. The shopkeeper using the data terminal equipment 2₁ fills out those input columns with, respectively, a shop name (item *ITname*), shop information (item *ITinfo*), bonus details (item *ITcob*), and the corresponding bonus identifier *IDbonus* (item *ITiob*).

The input form *Fin1* has a transmission button *Btx1,* a function assigned to which is of transmitting the items *ITname,* *ITinfo, ITcob*, and *ITiob* filled out in the input columns *Cname, Cinfo, Ccob,* and *Ciob* to the WWW server 1₁. The transmission button *Btx1* is clicked by the shopkeeper using the data terminal equipment 2₁. When the transmission button *Btx1* is clicked, the data terminal equipment 2₁ responsively transmits, to the WWW server 1₁, item data *Ditem1* (see FIG. 6) including those inputted items *ITname, ITinfo, ITcob,* and *ITiob*.

Described next is the bonus-attached file *Fbonus1,* which is created by the WWW server 1₁ using the item data *Ditem1* and base data *Dbase1*. With the bonus-attached file *Fbonus1,* such shop details *INshop1* as shown in FIG. 3B can be displayed at least on the data terminal equipment 3₁ side. The bonus-attached file *Fbonus1* herein represents a shop name (item *ITname*), shop information (item *ITinfo*), bonus details (item *ITcob*), and the corresponding bonus identifier *IDbonus* (Item *ITiob).*

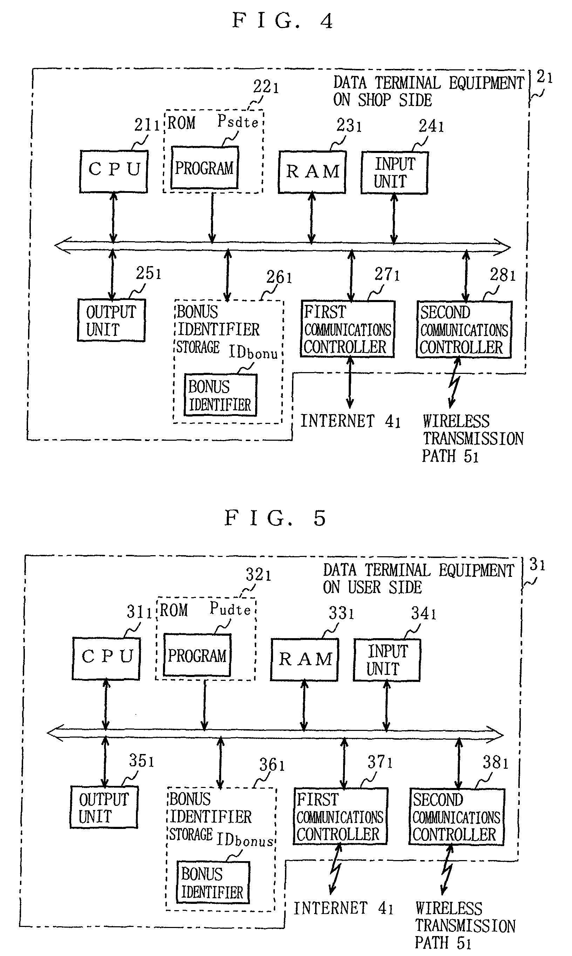

Refer back to FIG. 1. The data terminal equipment 2₁ is an information device which is placed on the shop side, and operated by the shopkeeper. The data terminal equipment 2₁ includes, as shown in FIG. 4, a CPU 21₁, ROM 22₁, RAM 23₁, an input unit 24₁, an output unit 25₁, a bonus identifier storage 26₁, a first communications controller 27₁, and a second communications controller 28₁. The CPU 21₁ goes through various processes by following a computer program (hereinafter, simply a program) *Psdte* which is previously recorded on the ROM 22₁. When executing the program *Psdte,* the CPU 21₁ uses the RAM 23₁ as a working area. The input unit 24₁ is typically composed of both a keyboard and a mouse, and therethrough, commands and data are inputted into the data terminal equipment 2₁. The output unit 25₁ typically includes a display, and externally outputs a processing result of the CPU 21₁ as images. The bonus identifier storage 26₁ is typically composed of a hard disk drive, and stores the above described bonus identifier *IDbonus.* In accordance with the Internet protocol, the first communications controller 27₁ sends out various data transferred from the RAM 23₁ to the Internet 4₁, or receives various data transmitted over the Internet 4₁ and transfers the data to the RAM 23₁. Since often immovably placed in the shop, the data terminal equipment 2₁ is preferably accessible to the Internet 4₁ using digital subscriber lines, for example. In accordance with the standard for the predetermined short-range wireless communications, the second communications controller 28₁ sends out various data transferred from the RAM 23₁ to the wireless transmission path 5₁, or receives various data transmitted over the wireless transmission path 5₁ and transfers the data to the RAM 23₁. Here, the typical standard for wireless communications is Bluetooth.

The data terminal equipment 3₁ is an information device typified by PDAs (Personal Digital Assistants), navigation devices, or mobile phones, and structured as being carried along by the user, i.e., the shop customer. The data terminal equipment 3₁ includes, as shown in FIG. 5, a CPU 31₁, ROM 32₁, RAM 33₁, an input unit 34₁, an output unit 35₁, a bonus identifier storage 36₁, a first communications controller 37₁, and a second communications controller 38₁. The CPU 31₁ goes through various processes by following a computer program (hereinafter, simply a program) *Pudte* which is previously recorded on the ROM 32₁. When executing the program *Pudte,* the CPU 31₁ uses the RAM 33₁ as a working area. The input unit 34₁ is typically composed of a pen or a keyboard, and therethrough, commands and data are inputted into the data terminal equipment 3₁. The output unit 35₁ typically includes a display, and externally outputs a processing result of the CPU 31₁ as images. The bonus identifier storage 36₁ is typically composed of a hard disk drive, and stores the above described bonus identifier *IDbonus.* In accordance with the Internet protocol, the first communications part 37₁ sends out various data transferred from the RAM 33₁ to the Internet 4₁, or receives various data transmitted over the Internet 4₁ and transfers the data to the RAM 33₁. Here, the first communications controller 37₁ is preferably structured as to be accessible to the Internet 4₁ using mobile phones or public telephones for ISDN (Integrated Service Digital Network) because the data terminal equipment 3₁ is carried along by the user. The second communications controller 38₁ sends out, in accordance with the same standard as the second communications controller 28₁ for the short-range wireless communications, various data transferred from the RAM 33₁ to the wireless transmission path 5₁, or transfers various data transmitted over the wireless transmission path 5₁ to the RAM 33₁.

Referring to FIGS. 6 to 8, described next is data communications performed in the data transmission system *Sdt*₁. Referring to FIG. 6, described first is data communications between the WWW server 1₁ and the data terminal equipment 2₁. In FIG. 6, the shopkeeper operates the data terminal equipment 2₁ to request the information provider to create and store a bonus-attached file *Fbonus1* for his or her shop. At the time of such a request, the CPU 21₁ executes a process written in the program *Psdte* responding to the shopkeeper's operation. More in detail, the CPU 21₁ first accesses the Internet 4₁ (sequence SQ1).

Then, the shopkeeper enters the first URL through operation of the input unit 24₁. The CPU 21₁ responsively generates on the RAM 23₁ a request *RSfd1* including the first URL, and transfers it to the first communications controller 27₁. Here, the request *RSfd1* is a signal for requesting the WWW server 1₁ to transmit the form data *Dform1* to the data terminal equipment 2₁. The first communications controller 27₁ sends out thus received request *RSfd1* onto the Internet 4₁. In such a manner, a request is made for the form data *Dform1* (sequence SQ2).

The request *RSfd1* is forwarded over the Internet 4₁ to the communications controller 16₁ in the WWW server 1₁, and then transferred to the RAM 13₁. After the request *RSfd1* is stored in the RAM 13₁, the CPU 11₁ executes a process written in the program *PSrvr.* To be specific, the CPU 11₁ extracts the first URL from the request *RSfd1* on the RAM 13₁, and then from the storage location of the form data storage 14₁ which is specified by the first URL, reads the form data *Dform1* onto the RAM 13₁. Then, the CPU 11₁ transfers the form data *Dform1* on the RAM 13₁ to the communications controller 16₁. The communications controller 16₁ sends out the form data *Dform1* onto the Internet 4₁ (sequence SQ3).

The form data *Dform1* is forwarded over the Internet 4₁ to the first communications controller 27₁ in the data terminal equipment 2₁, and then transferred to the RAM 23₁. The CPU 21₁ transfers the form data *Dform1* on the RAM 23₁ to the output unit 25₁. The output unit 25₁ performs a display process in accordance with the received form data *Dform1* so as to display on its screen such an input form *Fin1* as shown in FIG. 3A (sequence SQ4).

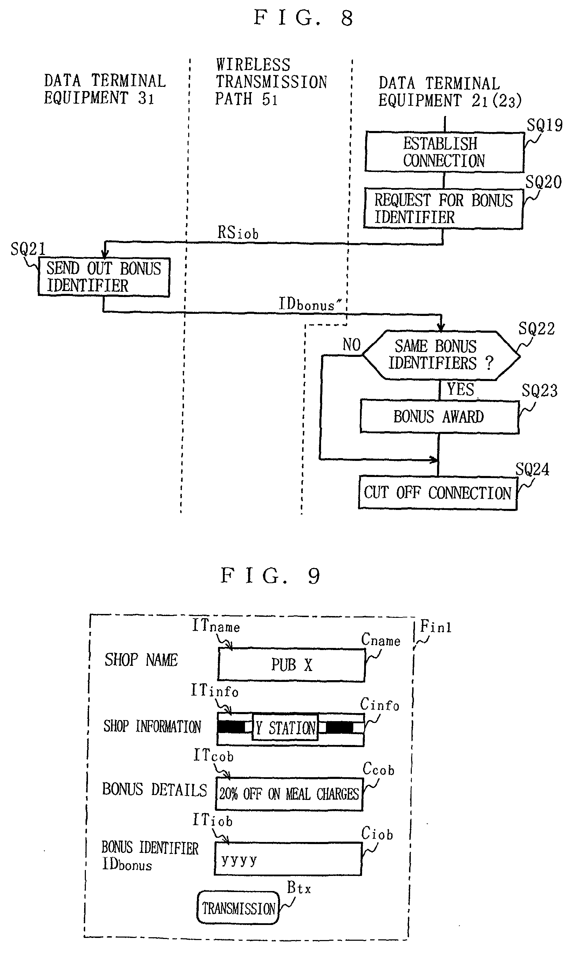

After the input form *Fin1* is displayed, the shopkeeper operates the input unit 24₁ to fill out the input columns *Cname, Cinfo,* Ccob, and *Ciob* with, respectively, the shop name (item *ITname),* the shop information (item *ITinfo),* the bonus details (item *ITcob),* and the corresponding bonus identifier *IDbonus* (item *ITiob*). As exemplarily shown in FIG. 9, the shopkeeper herein presumably fills out the input column *Cname* with the shop name "pub X", attaches a map image around the pub X to the input column *Cinfo* as shop information, fills out the input column *Ccob* with "20% OFF on meal charges" as bonus details, and fills out the input column *Ciob* by "yyyy" as the bonus identifier *IDbonus.* After completely filling out the input form *Fin1* as such, the shopkeeper clicks the transmission button *Btx1* through the input unit 24₁. Then, the CPU 21₁ creates the item data *Ditem1* including those inputted items *ITname, ITinfo, ITcob,* and *ITiob* on the RAM 23₁ (sequence SQ5).

Then, the CPU 21₁ stores the inputted bonus identifier *IDbonus* to the bonus identifier storage 26₁ (sequence SQ6). Here, the bonus identifier *IDbonus* stored in sequence SQ6 is referred to as an internal bonus identifier *IDbonus'* in the below. The internal bonus identifier *IDbonus'* is used in sequence SQ22 which will be later described, so that details thereof are left for later description. Here, the timing for sequence SQ6 is not restrictive as long as being carried out after the bonus identifier *IDbonus* is entered by the shopkeeper, and before sequence SQ22 is carried out. In the above presumption, stored in sequence SQ6 is yyyy (see FIG. 9).

Next, the CPU 21₁ transfers the item data *Ditem1* on the RAM 23₁ to the first communications controller 27₁, from which the item data *Ditem1* is sent out onto the Internet 4₁ (sequence SQ7).

The item data *Ditem1* is forwarded over the Internet 4₁ to the communications controller 16₁ in the WWW server 1₁, and then transferred to the RAM 13₁. Then, the CPU 11₁ creates a bonus-attached file *Fbonus1* (sequence SQ8). To be more specific, the CPU 11₁ reads the base file *Fbase1* to the RAM 13₁ from the bonus-attached file storage 15₁. Then, the CPU 11₁ arranges the items *ITname, ITinfo, ITcob,* and *ITiob* included in the item data *Ditem1* onto each predetermined position on the background represented by the base file *Fbase1.* In this manner, the bonus-attached file *Fbonus1* is created. Assuming that the items *ITname, ITinfo, ITcob,* and *ITiob* are those shown in FIG. 9, the bonus-attached file *Fbonus1* will be the one shown in FIG. 3B.

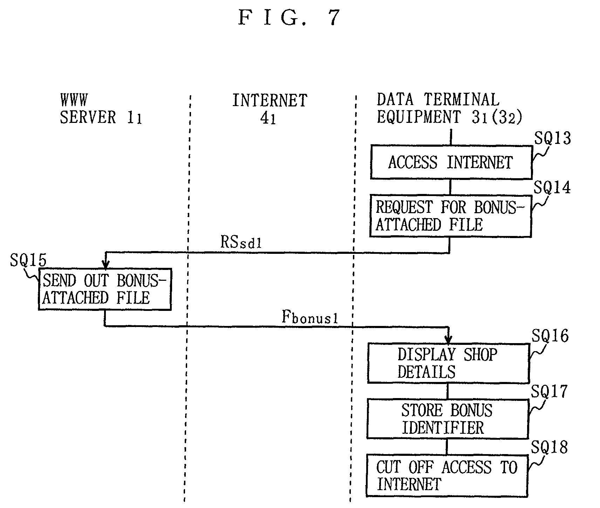

Then, the CPU 11₁ allocates the second URL to the bonus-attached file *Fbonus1* on the RAM 13₁, and then to the storage location of the bonus-attached file storage 15₁ specified by the second URL, stores the bonus-attached file *Fbonus1* (sequence SQ9). This allows the user's data terminal equipment 3₁ to request the bonus-attached file *Fbonus1* in sequence SQ14 of FIG. 7.

After creating a storage completion acknowledgement *ASsc1,* the CPU 11₁ transfers it to the communications controller 16₁. Here, the storage completion acknowledgement *ASsc1* is a signal including a message telling that the bonus-attached file *Fbonus1* is now stored in the bonus-attached file storage 15₁, and is forwarded to the data terminal equipment 2₁. The communications controller 16₁ sends out thus received storage completion acknowledgement *ASsc1* onto the Internet 4₁ (sequence SQ10).

The storage completion acknowledgement *ASsc1* is forwarded over the Internet 4₁ to the first communications controller 27₁ in the data terminal equipment 2₁, and then transferred to the RAM 23₁. The CPU 21₁ transfers the storage completion acknowledgement *ASsc1* thus stored in the RAM 23₁ to the output unit 25₁. The output unit 25₁ executes a display process in accordance with the received storage completion acknowledgement *ASsc1*, and then displays on its screen the message included therein (sequence SQ11). This makes the shopkeeper acknowledge that his or her request is now processed by the information provider, i.e., the WWW server 1₁. Then, the CPU 21₁ cuts off access to the Internet 4₁ (sequence SQ12).

In the above embodiment, sequences SQ1 to SQ12 are presumed to be gone through successively for convenience. This is not restrictive, and after sequence SQ7 is through, the CPU 21₁ may cut off access to the Internet 4₁. This is because it may take time to create the bonus-attached file *Fbonus1,* and if so, the shopkeeper may have to wait long, and may be charged for extra communications expenses. If this is the case, the WWW server 1₁ preferably transmits an e-mail including the same message as in the storage completion acknowledgement *ASsc1* to the data terminal equipment 2₁. The shopkeeper thus can read the message whenever convenient, thereby shortening waiting time and reducing communications expenses.

Referring to FIG. 7, described next is data communications between the WWW server 1₁ and the data terminal equipment 3₁. Through operation of the data terminal equipment 3₁, the user browses the bonus-attached file *Fbonus1* stored in the WWW server 1₁. During such browsing, the CPU 31₁ executes a process written in the program *Pudte* responding to the user's operation. More specifically, the CPU 31₁ accesses the Internet 4₁ (sequence SQ13).

Then, the user operates the input unit 34₁ to enter the second URL. The CPU 31₁ generates on the RAM 33₁ a request *RSsd1* including the second URL, and transfers it to the first communications controller 37₁. Here, the request *RSsd1* is a signal for requesting the WWW server 1₁ to forward the bonus-attached file *Fbonus1* to the data terminal equipment 3₁. The first communications controller 37₁ sends out the received request *RSsd1* onto the Internet 4₁. As such, a request is made for the bonus-attached file *Fbonus1* (sequence SQ14).

The request *RSsd1* is forwarded over the Internet 4₁ to the communications controller 16₁ in the WWW server 1₁, and then transferred to the RAM 13₁. After the request *RSsd1* is stored in the RAM 13₁, the CPU 11₁ executes a process written in the program *Psrvr.* To be specific, the CPU 11₁ extracts the second URL from the request *RSsd1* on the RAM 13₁, and from the storage location of the bonus-attached file storage 15₁ specified by the second URL, reads the bonus-attached file *Fbonus1* onto the RAM 13₁. Then, the CPU 11₁ transfers the bonus-attached file *Fbonus1* on the RAM 13₁ to the communications controller 16₁, from which the received bonus-attached file *Fbonus1* is sent out onto the Internet 4₁ (sequence SQ15).

The bonus-attached file *Fbonus1* is forwarded over the Internet 4₁ to the first communications controller 37₁ in the data terminal equipment 3₁, and then transferred to the RAM 33₁. The CPU 31₁ then transfers the bonus-attached file *Fbonus1* on the RAM 33₁ to the output unit 35₁. The output unit 35₁ executes a display process in accordance with the received bonus-attached file *Fbonus1,* and displays on its screen an image representing the shop details *INshop1* (sequence SQ16). In this manner, the shop details *INshop1* becomes available for the user to browse. Here, in the present embodiment, the user is assumed to browse the one shown in FIG. 3B.

After sequence SQ16, if the user decides to go to the displayed shop, and if he or she wants to get the bonus offered by the shop, the user operates the input unit 34₁ to instruct as such. In response, the CPU 31₁ stores the bonus identifier *IDbonus* included in the bonus-attached file *Fbonus1* on the RAM 33₁ into the bonus identifier storage 36₁ (sequence SQ17). Here, the bonus identifier *IDbonus* thus stored in sequence SQ17 is now referred to as an external bonus identifier *IDbonus".* The external bonus identifier *IDbonus"* is used in sequence SQ22 which will be described later, and thus is not described in detail here. In this example, the external bonus identifier *IDbonus"* this time is yyyy (see FIG. 3B).

After sequence SQ17 is through, the CPU 21₁ cuts off access to the Internet 4₁ (sequence SQ18).

After sequence SQ18, the user carries the data terminal equipment 3₁ with him or her to get services from the target shop, and/or make purchases thereat. Here, the target shop is the one displayed in sequence SQ16. In the present embodiment, it is assumed that the target shop is the pub X shown in the shop details *INshop1* of FIG. 3B. The user receives the bonus displayed in sequence SQ16 from the target shop. To receive the bonus, such data communications as shown in FIG. 8 is performed between the data terminal equipment 2₁ and 3₁.

In FIG. 8, the CPU 21₁ in the data terminal equipment 2₁ executes a process written in the program *Psdte* responding to the shopkeeper's operation. In detail, the CPU 21₁ establishes a connection with the data terminal equipment 3₁ in accordance with the standard for the short-range wireless communications (sequence SQ19). After such a connection establishment, the CPU 31₁ on the data terminal equipment 3₁ side executes a process written in the program *Pudte.*

Then, the CPU 21₁ generates a request *RSiob* on the RAM 33₁, and transfers it to the second communications controller 28₁. Here, the request *RSiob* is a signal for requesting the data terminal equipment 3₁ to transmit the external bonus identifier *IDbonus"* to the data terminal equipment 2₁. The second communications controller 28₁ sends out the received request *RSiob* onto the wireless transmission path 5₁. As such, a request is made for the bonus identifier (sequence SQ20).

The request *RSiob* is forwarded over the wireless transmission path 5₁ to the second communications controller 38₁ in the data terminal equipment 3₁, and then transferred to the RAM 33₁. After the request *RSiob* is stored in the RAM 33₁, the CPU 31₁ reads the external bonus identifier *IDbonus"* from the bonus identifier storage 36₁ onto the RAM 33₁. Then, the CPU 31₁ transfers the external bonus identifier *IDbonus"* on the RAM 33₁ to the second communications controller 38₁, from which the received external bonus identifier *IDbonus"* is sent out onto the wireless transmission path 5₁ (sequence SQ21).

The external bonus identifier *IDbonus"* is forwarded over the wireless transmission path 5₁ to the second communications controller 28₁ in the data terminal equipment 2₁, and then transferred to the RAM 23₁. Then, the CPU 21₁ reads the internal bonus identifier *IDbonus'* from the bonus identifier storage 26₁ onto the RAM 23₁. Here, the timing for reading the internal bonus identifier *IDbonus'* is not restrictive as long as it is after sequence SQ19, and before sequence SQ22. As such, the RAM 23₁ stores both the internal and external bonus identifiers *IDbonus'* and *IDbonus".* The CPU 21₁ determines whether the external bonus identifier *IDbonus"* is the same as the internal bonus identifier *IDbonus'* (sequence SQ22).

When the external bonus identifier *IDbonus"* is the same as the internal bonus identifier *IDbonus'*, the CPU 21₁ determines that the user is the one visiting the shop due to the shop details *INshop1*, and the procedure goes to sequence SQ23. Then, the CPU 21₁ executes a process of awarding the bonus to the user (sequence SQ23). In the present embodiment, the user is assumed as visiting the shop due to the shop details *INshop1* of FIG. 3B, the external bonus identifier *IDbonus"* stored in the data terminal equipment 3₁ is yyyy. Also, the target shop is assumed as being the one in the shop details *INshop1* of FIG. 3B, and thus the internal bonus identifier *IDbonus'* stored in the data terminal equipment 2₁ is yyyy. Accordingly, the user gets a bonus of 20% OFF on meal charges. In sequence SQ23, specifically, the CPU 21₁ has the output unit 25₁ displayed the resultant 20% deducted amount of charge. The shopkeeper accordingly charges the user for the amount displayed on the display 25₁.

After sequence SQ23 is through, the CPU 21₁ cuts off the connection with the data terminal equipment 3₁ (sequence SQ24).

Refer to sequence SQ22 again. In the case where the external bonus identifier *IDbonus"* is not the same as the internal bonus identifier *IDbonus',* the CPU 21₁ determines that the user is not the one visiting the shop due to the shop details *INshop1*, and thus sequence SQ23 is skipped and SQ24 is carried out. In other words, the CPU 21₁ does not give the bonus to the user.

From the viewpoint of bonus award only to the users visiting the shop due to the shop details *INship1*, it is more preferable for the CPU 21₁ to go through sequence SQ23 only when the external bonus identifier *IDbonus"* is the same as the internal bonus identifier *IDbonus'*.

As such, in the data transmission system *Sdt*₁, the bonus-attached file *Fbonus1* includes a bonus identifier *IDbonus,* which is stored in sequence SQ6 into the data terminal equipment 2₁ on the shop side as the internal bonus identifier *IDbonus',* and stored in sequence SQ17 into the user's data terminal equipment 3₁ as the external bonus identifier *IDbonus".* When the user visits the shop, the data terminal equipment 2₁ receives the external bonus identifier *IDbonus"* from the data terminal equipment 3₁, and if determines it as being the same as the internal bonus identifier *IDbonus'* stored therein, gives the user the bonus in the bonus-attached file *Fbonus1.* Accordingly, the user has no more need to print out coupons, and in this respect, the data transmission system *Sdt*₁ realizes better usability than the conventional.

Note that, in the first embodiment, the bonus is exemplified by 20% OFF on meal charges. This is not restrictive, and the bonus may be points to be provided according to the amount of charge. In such a case, the data terminal equipment 2₁ or 3₁ calculates the user's points in total, and the shop correspondingly provides the user with gifts or service. Such a point service is also applicable to second and third embodiments in the below.

In the first embodiment, the bonus-attached file *Fbonus1* is specifically for a pub. However, any other shops and facilities whichever the user can visit are surely possible to be included in the bonus-attached file *Fbonus1.*

Here, the bonus-attached file *Fbonus1* may be assigned with at least a bonus and the corresponding bonus identifier *IDbonus,* by which the location where the bonus is available is indicated. The bonus-attached file *Fbonus1* may also include some other types of information. For example, if the bonus-attached file *Fbonus1* is the one for a boutique, any information relating to sales to be held thereat may be additionally included, or for a vacationland, any information about their event schedule, and if for any user gathering facilities such as movie theaters, any information about the crowding level or the waiting time. Also, the bonus-attached file *Fbonus1* may include menu information or bonuses of any specific celebrity's favorite restaurants, or sale information or bonuses of any specific boutiques. This is also applicable to the second and third embodiments in the below.

In the first embodiment, the data terminal equipment 2₁ and 3₁ exemplarily perform data communications using the wireless transmission path 5₁. This is not restrictive, and a wired transmission path, e.g., USB (Universal Serial Bus) cable, may be used for the purpose. Alternatively, the Internet 4₁ may be used for data communications of FIG. 8 between the data terminal equipment 2₁ and 3₁. This is also applicable to the second and third embodiments below.

In the above, the data terminal equipment 3₁ exchanges the external bonus identifier *IDbonus"* with the data terminal equipment 2₁ through the wireless transmission path 5₁ (sequences SQ21 and SQ22 of FIG. 8). Alternatively, the following manner is also possible for such an exchange. That is, the data terminal equipment 2₁ and 3₁ are each provided with a card memory slot of the same standard. Here, the card memory is typified by an SD Card™, Smartmedia™, or a MemoryStick™. The data terminal equipment 3₁ uses the card memory whichever inserted into its slot as the bonus identifier storage 36₁, in which the external bonus identifier *IDbonus"* is stored. Such a card memory is extracted from the slot on the data terminal equipment 3₁ in the shop, and inserted into the slot on the data terminal equipment 2₁. After the card memory is inserted into the slot on the data terminal equipment 2₁, the CPU 21₁ responsively reads from the memory the external bonus identifier *IDbonus"* to the RAM 23₁. This is also applicable to the second and third embodiments in the below.

In the first embodiment, the WWW server 1₁ exemplarily performs data communications with the data terminal equipment 2₁ and 3₁ over the Internet 4₁ (see FIGS. 6 and 7). However, any other networks as LAN (Local Area Network) may be used for the data communications. That is, the bonus-attached file *Fbonus1* may be stored not only in the WWW server 1₁ but in any different type of servers. This is also applicable to the second and third embodiments in the below.

Also, in the above, the WWW server 1₁ exemplarily stores the bonus-attached file *Fbonus1.* However, the data terminal equipment 2₁ may be provided with a function of the WWW server 1₁ for storing and transmitting the bonus-attached file *Fbonus1* to the data terminal equipment 3₁. This is also applicable to the second and third embodiments in the below.

In the first embodiment, a single data terminal equipment 2₁ is presumed for convenience to perform both data communications of FIGS. 6 and 8. This is not restrictive, and two of the data terminal equipment 2₁ physically differed from each other may be provided, and one may be in charge of data communications of FIG. 6, and the other data communications of FIG. 8.

In the above, included in the bonus-attached file *Fbonus1* is exemplarily a bonus and a bonus identifier *IDbonus* specifying the bonus. However, the bonus-attached file *Fbonus1* may include a plurality of bonuses, and a plurality of bonus identifiers *IDbonus* for each uniquely specifying the bonuses. Here, if included in the bonus-attached file *Fbonus1* is a single bonus, a URL may be used as the bonus identifier *IDbonus* because the bonus-attached file *Fbonus1* and the bonus uniquely correspond to each other. This is also applicable to the second and third embodiments in the below.

In the above first embodiment, the bonus-attached file *Fbonus1* is created by the WWW server 1₁ using the items *IT* forwarded from the data terminal equipment 2₁. Alternatively, the bonus-attached file *Fbonus1* may be created as below. That is, the shopkeeper may create a draft of the shop details *INshop1* for his or her shop, and passes it to the information provider. Based on the draft, the information provider creates the bonus-attached file *Fbonus1* representing the shop details *INshop1* using a personal computer, for example, and uploads it to their WWW server 1₁. In this case, there is no need for data communications as shown in FIG. 6. Further, the shopkeeper hands the draft directly to the information provider not over the Internet 4₁, and as a result, the shopkeeper operates the data terminal equipment 2₁ less often. This is also applicable to the second and third embodiments in the below.

In the case where the bonus-attached file *Fbonus1* is created as above, the bonus identifier *IDbonus* is stored in the data terminal equipment 2₁ in the following three manners. In the first manner, the shopkeeper specifies a bonus identifier *IDbonus* when passing the draft of the shop details *INshop1* to the information provider. In response to the shopkeeper's operation, the data terminal equipment 2₁ stores thus specified bonus identifier *IDbonus* into the bonus identifier storage 26₁.

In the second manner, the information provider allocates a bonus identifier *IDbonus* when creating the bonus-attached file *Fbonus1,* and notifies the bonus identifier *IDbonus* to the shopkeeper typically by an e-mail. In response to the shopkeeper's operation, the data terminal equipment 2₁ stores thus notified bonus identifier *IDbonus* in the bonus identifier storage 26₁.

In the third manner, the information provider allocates the bonus identifier *IDbonus* when creating the bonus-attached file *Fbonus1.* Because the bonus-attached file *Fbonus1* indicates the bonus identifier *IDbonus* as already described, if the bonus-attached file *Fbonus1* has been uploaded, the shopkeeper operates the data terminal equipment 2₁ to browse the bonus-attached file *Fbonus1* for the shop details *INshop1*, and derives the bonus identifier *IDbonus* therefrom. Responding to the shopkeeper's operation, the data terminal equipment 2₁ then stores thus derived bonus identifier *IDbonus* in the bonus identifier storage 26₁.

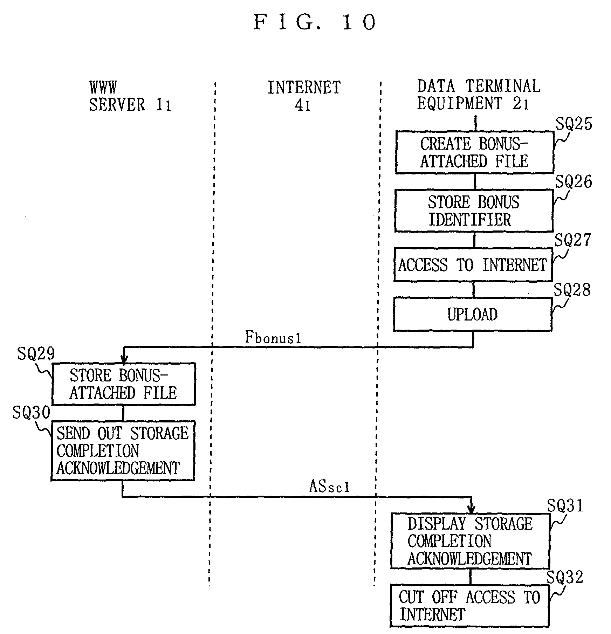

Described next is a data transmission system *Sdt*₁' as a modified example of the first embodiment. The data transmission system *Sdt*₁' is different from the data transmission system *Sdt*₁ in the respect that the WWW server 1₁ does not include the form data storage 14₁, and performed therein is not data communications of FIG. 6 but that of FIG. 10. These are the only differences therebetween, and thus FIGS. 1 to 5, and FIGS. 7 to 9 are referred to for description in the below.

Prior to data communications of FIG. 10, the shopkeeper has the information provider allocated a storage location of the bonus-attached file storage 15₁ in the WWW server 1₁. At this time, the shopkeeper is notified of homepage directory of the second URL, which is described in the above. Here, the homepage directory is the one determined by the information provider, and specifies the storage location allocated to the shopkeeper.

In FIG. 10, the shopkeeper creates the bonus-attached file *Fbonus1* for his or her shop through operation of the data terminal equipment 2₁, and uploads it to the WWW server 1₁. At this time, the CPU 21₁ executes a process written in the program *Psdte* responding to the shopkeeper's operation. In detail, the CPU 21₁ creates the bonus-attached file *Fbonus1* for the shop details *INshop1* (see FIG. 3B) in response to the shopkeeper's operation (sequence SQ25). In more detail, the CPU 21₁ arranges on the RAM 23₁ the items *ITname, ITinfo, ITcob,* and *ITiob* on the background (see the first embodiment for details), creating the bonus-attached file *Fbonus1* for the shop details *INshop1.*

The CPU 21₁ then stores thus inputted bonus identifier *IDbonus* (item *ITiob* used in sequence SQ25) on the RAM 23₁ into the bonus identifier storage 26₁ as the internal bonus identifier *IDbonus'* (sequence SQ26). Here, the timing for sequence SQ26 is not restrictive as long as it is carried out after sequence SQ25, and before the data terminal equipment 3₁ requests for the bonus-attached file *Fbonus1* (see sequence SQ14 of FIG. 7).

Next, the CPU 21₁ accesses the WWW server 1₁ responding to the shopkeeper's operation to upload thereto the bonus-attached file *Fbonus1* created in sequence SQ25 (sequence SQ28). More specifically, the shopkeeper adds his or her preferred file name to the homepage directory notified by the information provider through operation of the input unit 24₁, and specifies the second URL for the bonus-attached file *Fbonus1* to be uploaded. The CPU 21₁ transfers the bonus-attached file *Fbonus1* on the RAM 23₁ and the specified second URL to the first communications controller 27₁, from which the received bonus-attached file *Fbonus1* and the second URL are sent out onto the Internet 4₁.

The bonus-attached file *Fbonus1* and the second URL are forwarded over the Internet 4₁ to the communications controller 16₁ in the WWW server 1₁, and then transferred to the RAM 13₁. After the bonus-attached file *Fbonus1* is stored in the RAM 13₁, the CPU 11₁ executes a process written in the program *Psrvr.* The CPU 11₁ then stores the bonus-attached file *Fbonus1* on the RAM 13₁ into the storage location of the bonus-attached file storage 15₁ specified by the second URL on the RAM 13₁ (Sequence SQ29). As a result, the bonus-attached file *Fbonus1* becomes available for the data terminal equipment 3₁ to request.

After creating the same storage completion acknowledgement *ASsc1* as in the first embodiment, the CPU 11₁ transfers it to the communications controller 16₁, from which thus received storage completion acknowledgement *ASsc1* is sent out onto the Internet 4₁ (sequence SQ30).

The storage completion acknowledge *ASsc1* is forwarded over the Internet 4₁ to the first communications controller 27₁ in the data terminal equipment 2₁, and then transferred to the RAM 23₁. The CPU 21₁ then transfers the storage completion acknowledgement *ASsc1* thus stored in the RAM 23₁ to the output unit 25₁. The output unit 25₁ then goes through a display process in accordance with the received storage completion acknowledgement *ASsc1,* and displays on its screen a message included therein (sequence SQ31). With the message, the shopkeeper can acknowledge that the bonus-attached file *Fbonus1* is now stored in the WWW server 1₁. Then, the CPU 21₁ cuts off access to the Internet 4₁ (sequence SQ32). Thereafter, data communications of FIGS. 7 and 8 is carried out.

As such, in this modified example, the shopkeeper can create freely the bonus-attached file *Fbonus1* to suit his or her preferences only by being allocated with the homepage directory (i.e., storage location of the bonus-attached file storage 15₁) by the information provider.

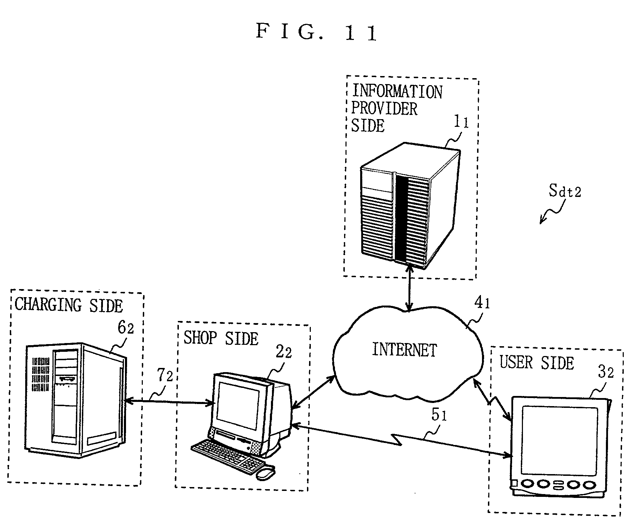

Described next is a data transmission system *Sdt*₂ according to the second embodiment of the present invention. FIG. 11 is a block diagram showing the structure of the data transmission system *Sdt*₂. The data transmission system *Sdt*₂ roughly includes the WWW server 1₁ which is the same as in the first embodiment, data terminal equipment 2₂ and 3₂, and a center station 6₂. The WWW server 1₁ and the data terminal equipment 2₂ and 3₂ are so structured as to be accessible to the Internet 4₁, which is the same as in the first embodiment. With such a structure, the WWW server 1₁ at least can perform data communications with the data terminal equipment 2₂ and 3₂ over the Internet 4₁. The data terminal equipment 2₂ and 3₂ can perform data communications over the wireless transmission path 5₁, which is the same as in the first embodiment. Also, the data terminal equipment 2₂ can perform data communications with the center station 6₂ over a wired or wireless transmission path 7₂. Here, the transmission path 7₂ is either a public line or a leased line.

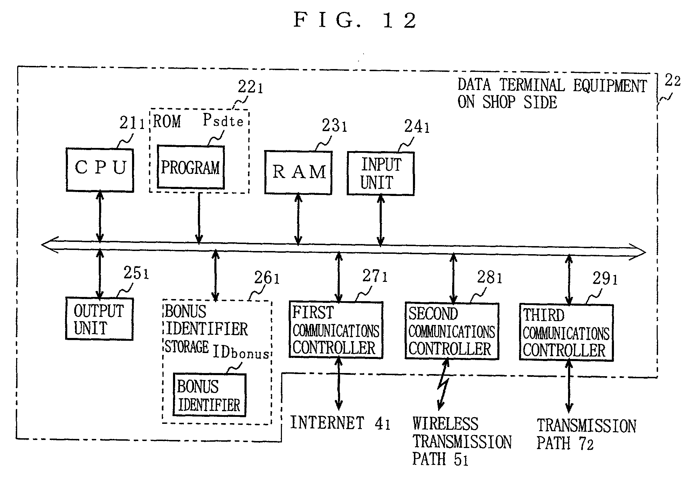

The data terminal equipment 2₂ is an information device which is, as is the data terminal equipment 2₁, placed on the shop side, and operated by the shopkeeper. FIG. 12 shows the structure thereof. Compared with the data terminal equipment 2₁ of FIG. 4, the data terminal equipment 2₂ of FIG. 12 further includes a third communications controller 29₂. This is the only structural difference, and thus any constituent of FIG. 12 identical to that of FIG. 4 is provided with the same reference numeral, and not described again. In accordance with the transmission protocol for the transmission path 7₂, the third communications controller 29₃ sends out various data transferred from the RAM 23₁ to the transmission path 7₂, or receives various data transmitted over the transmission path 7₂ and transfers the data to the RAM 23₁.

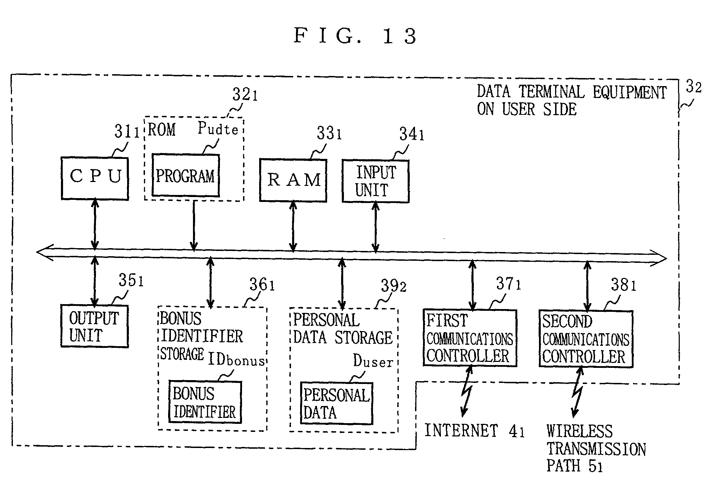

Similar to the data terminal equipment 3₁, the data terminal equipment 3₂ is an information device structured as to be carried along by the user, the structure of which is shown in FIG. 13. Compared with the data terminal equipment 3₁ of FIG. 5, the data terminal equipment 3₂ of FIG. 13 further includes a personal data storage 39₂. This is the only structural difference therebetween, and thus any constituent of FIG. 13 identical to that of FIG. 5 is provided with the same reference numeral, and not described again. The personal data storage 39₂ stores the user's personal data *Duser.* Herein, the personal data *Duser* is presumably composed of the user's credit card number, and the valid date of the credit card.

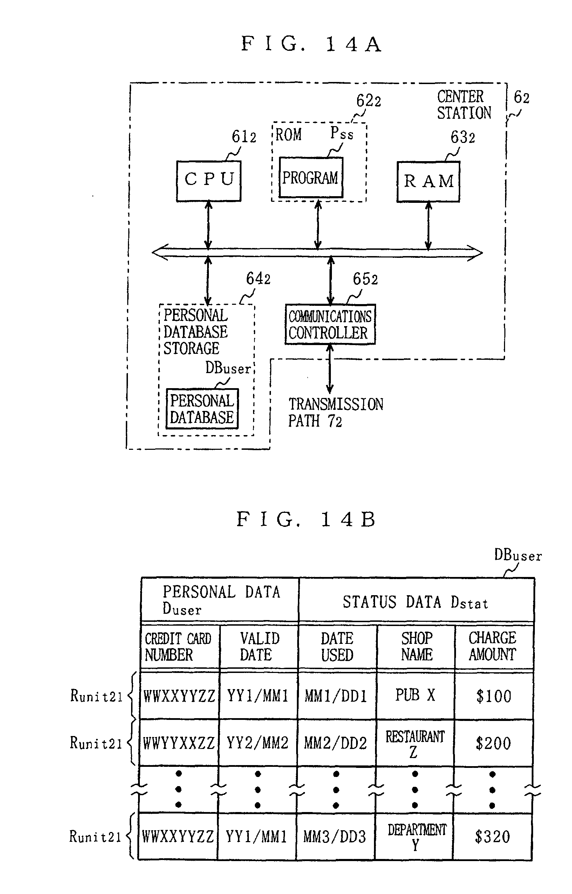

The center station 6₂ is managed by a credit card provider, and performs a billing process with respect to the user. The center station 6₂ includes, as shown in FIG. 14A, a CPU 61₂. ROM 62₂, RAM 63₂, a personal database storage 64₂, and a communications controller 65₂. The CPU 61₁ executes various processes by following a computer program *Pss* which is previously recorded on the ROM 62₂. When executing the computer program *Pss,* the CPU 61₁ uses the RAM 63₂ as a working area. The personal database storage 64₂ is typically composed of a hard disk drive, and stores therein a personal database *DBuser* (see FIG. 14B) . In accordance with the transmission protocol for the transmission path 7₂, the communications controller 65₂ sends out various data transferred from the RAM 63₂ to the transmission path 7₂, or receives various data transmitted over the transmission path 7₂ and transfers the data to the RAM 63₂.

The personal database *DBuser* stores personal data *Duser* and status data *Dstat* for every user under contract to the credit card provider. As a specific example, the personal database *DBuser* is composed of, as shown in FIG. 14B, a plurality of unit records *Runit21,* each of which represents a user's status report of his or her credit card. The record unit *Runit21* includes both the personal data *Duser* and the status data *Dstat.* Specifically, the personal data *Duser* is, as already described, composed of the user's credit card number and its valid date. The status data *Dstat* at least includes the date when the user used the credit card, the shop name where the user used the credit card, and the user's amount of charge (charged amount *Cdisc* or *Cnoml,* which will be later described).

Described next is data communications performed in the data transmission system *Sdt*_{*2*}. Data communications between the WWW server 1₁ and the data terminal equipment 2₂ is the same as that of FIG. 6, and not described here. Also, data communications between the WWW server 1₁ and the data terminal equipment 3₂ is the same as that of FIG. 7, and not described here either.

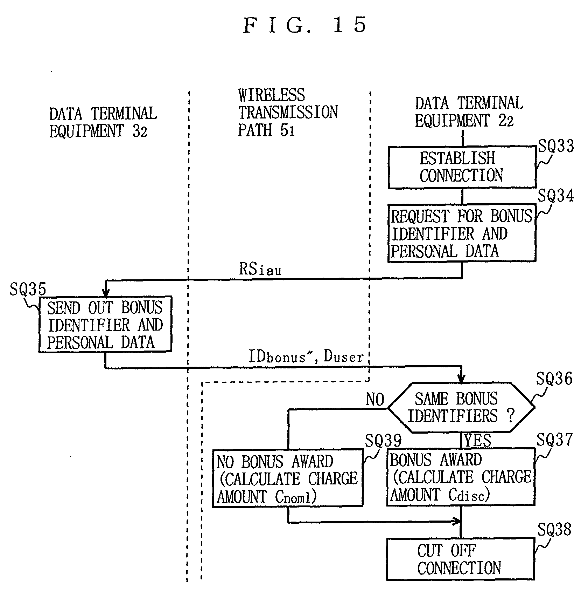

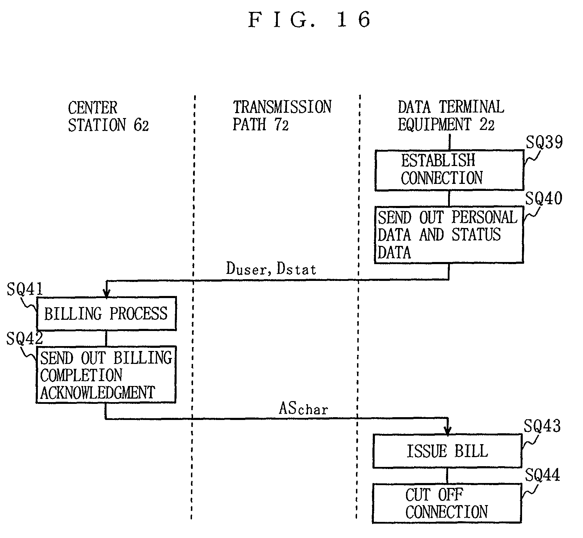

After sequence SQ18 of FIG. 7, the user goes to the target shop with the data terminal equipment 3₂ to get services from the shop, make purchases thereat, and receive the corresponding bonus. In the target shop, data communications as shown in FIGS. 15 and 16 is performed among the data terminal equipment 2₂ and 3₂, and the center station 6₂.

In FIG. 15, the CPU 21₁ in the data terminal equipment 2₂ executes a process written in the program *Psdte* responding to the shopkeeper's operation. More specifically, the CPU 21₁ establishes a connection with the data terminal equipment 3₂ (sequence SQ33). After such a connection establishment, the CPU 31₁ on the data terminal equipment 3₂ side executes a process written in the program *Pudte.*

The CPU 21₁ generates a request *RSiau* on the RAM 33₁, and transfers it to the second communications controller 28₁. Here, the request *RSiau* is a signal for requesting the data terminal equipment 3₂ to transmit the external bonus identifier *IDbonus"* and the personal data *Duser* to the data terminal equipment 2₂. The second communications controller 28₁ then sends out the received request *RSiau* onto the wireless transmission path 5₁. In such a manner, a request is made for the bonus identifier and the personal data (sequence SQ34).

The request *RSiau* is forwarded over the wireless transmission path 5₁ to the second communications controller 38₁ in the data terminal equipment 3₂, and then transferred to the RAM 33₁. After the request *RSiau* is stored in the RAM 33₁, the CPU 31₁ reads the external bonus identifier *IDbonus"* from the bonus identifier storage 36₁ onto the RAM 33₁. The CPU 31₁ also reads the personal data *Duser* from the personal data storage 39₂ onto the RAM 33₁. Then, the CPU 31₁ transfers, to the second communications controller 38₁, the external bonus identifier *IDbonus"* and the personal data *Duser* on the RAM 33₁. The second communications controller 38₁ sends out thus received external bonus identifier *IDbonus"* and the personal data *Duser* onto the wireless transmission path 5₁ (sequence SQ35).

The external bonus identifier *IDbonus"* and the personal data *Duser* are forwarded over the wireless transmission path 5₁ to the second communications controller 28₁ in the data terminal equipment 2₂, and then transferred to the RAM 23₁. The CPU 21₁ also reads out the internal bonus identifier *IDbonus'* from the bonus identifier storage 26₁ onto the RAM 23₁. Here, the timing for reading the internal bonus identifier *IDbonus*' is not restrictive as long as it is between after sequence SQ33 and before sequence SQ36. In such a manner, the RAM 23₁ stores the personal data *Duser,* and the internal and external bonus identifiers *IDbonus'* and *IDbonus".* Next, the CPU 21₁ determines whether the external bonus identifier *IDbonus"* is the same as the internal bonus identifier *IDbonus'* (sequence SQ36).

If the external bonus identifier *IDbonus"* is the same as the internal bonus identifier *IDbonus',* the CPU 21₁ determines that the user is the one visiting the shop due to the shop details *INshop1*, and the procedure goes to sequence SQ37. Then, the CPU 21₁ executes a process of awarding the bonus to the user (sequence SQ37). Herein, similar to the first embodiment, the user is assumed as visiting the shop due to the shop details *INshop1* of FIG. 3B, and the external bonus identifier *IDbonus"* stored in the data terminal equipment 3₁ is yyyy. Also, the target shop is assumed as being the one found in the shop details *INshop1* of FIG. 3B similar to the first embodiment, and thus the internal bonus identifier *IDbonus*' stored in the data terminal equipment 2₂ is also yyyy. Accordingly, the user gets a bonus of 20% OFF on meal charges. In sequence SQ37, specifically, the CPU 21₁ calculates the resultant 20% deducted amount of charge, i.e., charge amount *Cdisc.* The CPU 21₁ then creates, on the RAM 23₁, the status data *Dstat* including thus calculated charge amount *Cdisc,* the date, i.e., when the credit card is used, and the shop name. Here, the shop name is assumed to be previously registered in the data terminal equipment 2₂. Preferably, the CPU 21₁ has the output unit 25₁ displayed the charge amount *Cdisc* for the user.

After sequence SQ37 is through, the CPU 21₁ cuts off the connection with the data terminal equipment 3₂ (sequence SQ38).

In sequence SQ37, if the CPU 21₁ determines that the external bonus identifier *IDbonus"* is not the same as the internal bonus identifier *IDbonus',* the procedure goes to sequence SQ39 of FIG. 16. In sequence SQ39, the CPU 21₁ executes a process of not giving the user the bonus, which is 20% OFF on meal charges in the above example. In such a case, the CPU 21₁ makes no discount on the user's meal charges in sequence SQ39, and the resultant amount charge is derived as the charge amount *Cnoml.* The CPU 21₁ then creates, on the RAM 23₁, the status data *Dstat* including thus calculated charge amount *Cnoml,* the date, i.e., when the credit card is used, and the shop name. Preferably, the CPU 21₁ has the output unit 25₁ displayed the charge amount *Cnoml.*

After sequence SQ37 is through, the CPU 21₁ cuts off the connection with the data terminal equipment 3₂ (sequence SQ38).

After sequence SQ38 is through, the CPU 21₁ establishes a connection with the center station 6₂ (sequence SQ39). After such a connection establishment, the CPU 61₂ on the center station 6₂ side executes a process written in the computer program *Pss.*

After sequence SQ39, the CPU 21₁ transfers, to the third communications controller 29₂, the set of the personal data *Duser* and the status data *Dstat* on the RAM 23₁. The third communications controller 29₂ sends out thus received set onto the transmission path 7₂ (sequence SQ40).

The set of the personal data *Duser* and the status data *Dstat* is forwarded over the transmission path 7₂ to the communications controller 65₂ in the center station 6₂, and then transferred to the RAM 63₂. Then, the CPU 61₁ performs a billing process (sequence SQ41). More specifically, the CPU 61₂ searches the personal database *DBuser* in the personal database storage 64₂ for any unit record *Runit* (hereinafter, referred to as a target unit record *Runit')* including the same personal data *Duser* on the RAM 63₂. Once found the target unit record *Runit',* the CPU 61₁ fills the unit record Runit' with the charge amount *Cdics* (or *Cnoml*), the date, and the shop name included in the status data *Dstat* on the RAM 63₂. This is the end of the billing process.

After the billing process (sequence SQ41) is correctly through, the CPU 61₂ generates, on the RAM 63₂, a billing completion acknowledgement *ASchar* to indicate as such, and transfers it to the communications controller 65₂. The communications controller 65₂ sends out thus received billing completion acknowledgement *ASchar* onto the transmission path 7₂ (sequence SQ42).

The billing completion acknowledgement *ASchar* is forwarded over the transmission path 7₂ to the third communications controller 29₂ in the data terminal equipment 2₂, and then transferred to the RAM 23₁. Then, the CPU 21₁ preferably goes through a process of issuing the bill (sequence SQ43), and the bill is handed to the user at the shop. After sequence SQ43, the CPU 21₁ cuts off the connection with the center station 6₂ (sequence SQ44).

On the other hand, if the billing process (sequence SQ41) is failed to be correctly completed, the CPU 61₂ generates, on the RAM 63₂, an incompletion acknowledgement indicating as such, and forwards it to the data terminal equipment 2₂ via the communications controller 65₂ and the transmission path 7₂. In response, the data terminal equipment 2₂ cancels all of the sequences so far carried out. As to such a case where the billing process (sequence SQ41) is not correctly through, no further description is given here as is not the scope of the present embodiment.

The credit card provider charges the user based on the unit record *Runit* recorded on the personal database *DBuser.*

As described above, with the data transmission system *Sdt*₂, the user can receive the bonus from the target shop as with the data transmission system *Sdt*₁. Moreover, with the personal data *Duser* previously stored in the data terminal equipment 3₂, the user can receive services from the shop or make purchases thereat with no cash payment. In this sense, the data transmission system *Sdt*₂ has better usability.

Also in the second embodiment, the bonus may be points given to the user according to his or her meal charges. In this case, the data terminal equipment 2₂ or 3₂ calculates the user's points in total, and correspondingly provides the user with gifts or services. In the case where such a point service is the bonus, with no discount on the user's meal charges in sequence SQ37, the CPU 21₁ calculates the charge amount *Cnoml,* and the corresponding points are provided to the user. On the other hand, if the CPU 21₁ calculates the charge amount *Cnoml* in sequence SQ39, no point is provided to the user.

In the second embodiment, a single data terminal equipment 2₂ is presumed for convenience to perform all of data communications of FIGS. 6, 15, and 16. This is not restrictive, and two of the data terminal equipment 2₂ physically differed from each other may be provided, and one may be in charge of data communications of FIG. 6, and the other data communications of FIGS. 15 and 16.

In the above, the data terminal equipment 3₂ stores the user's credit card number and its valid date as the personal data *Duser,* and is provided with a function as credit cards. This is not restrictive, and the data terminal equipment 3₂ may store the user's bank account number and its PIN (Personal Identification Number), and be provided with a function as debit cards.

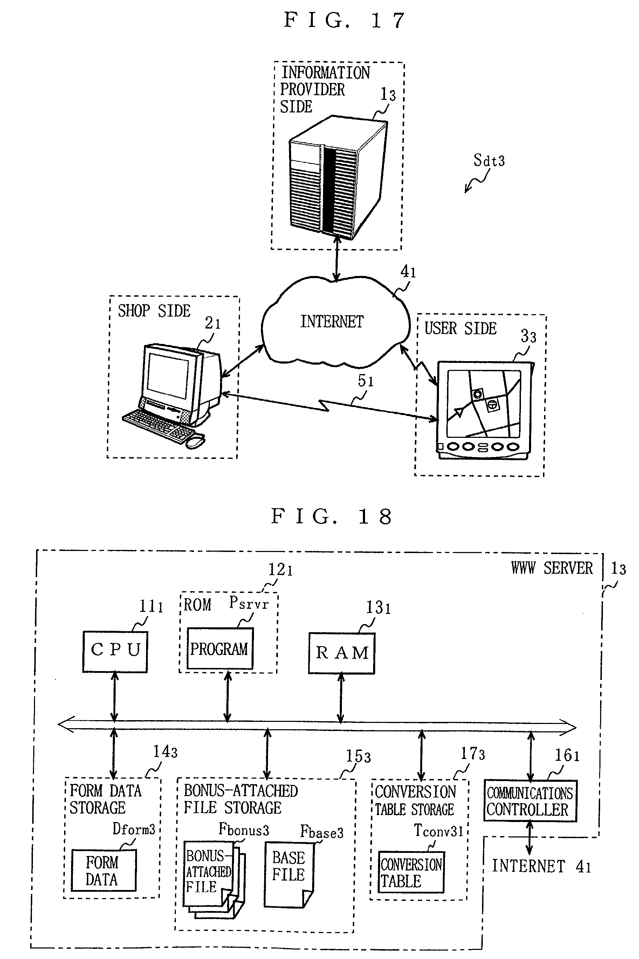

Described next is a data transmission system *Sdt*_{*3*} according to the third embodiment of the present invention. FIG. 17 is a block diagram showing the structure of the data transmission system *Sdt*₃, which roughly includes a WWW server 1₃, the same data terminal equipment 2₁ as in the first embodiment, and data terminal equipment 3₃. Herein, the WWW server 1₃, and the data terminal equipment 2₁ and 3₃ are so structured as to be accessible to the Internet 4₁, which is the same as in the first embodiment. With such a structure, at least the WWW server 1₃ can perform data communications with the data terminal equipment 2₁ and 3₃ over the Internet 4₁. Moreover, the data terminal equipment 2₁ and 3₃ can perform data communications therebetween over the wireless transmission path 5₁, which is the same as in the first embodiment.

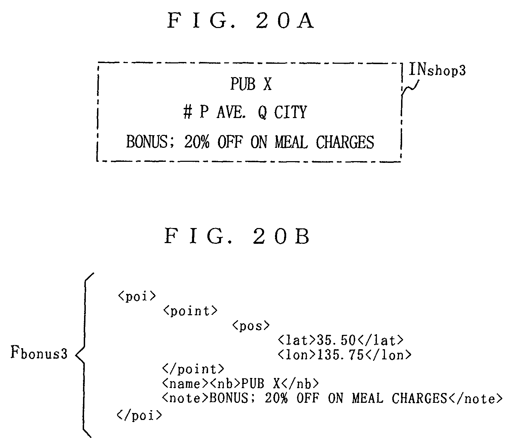

FIG. 18 shows the structure of the WWW server 1₃, which is managed by an information provider. Here, the information provider is the one who stores a bonus-attached file *Fbonus3* (see FIG. 20B) in the WWW server 1₃ responding to a request from the shop, and by using the bonus-attached file *Fnonus3,* provides the shop details to the user. Here, compared with the WWW server 1₁ of FIG. 2, the WWW server 1₃ of FIG. 18 includes a form data storage 14₃, a bonus-attached file storage 15₃, and a conversion table storage 17₃ as alternatives to the form data storage 14₁, and the bonus-attached file storage 15₁. These are the only structural differences therebetween, and thus any constituent of FIG. 18 identical to that of FIG. 2 is provided with the same reference numeral, and not described again.

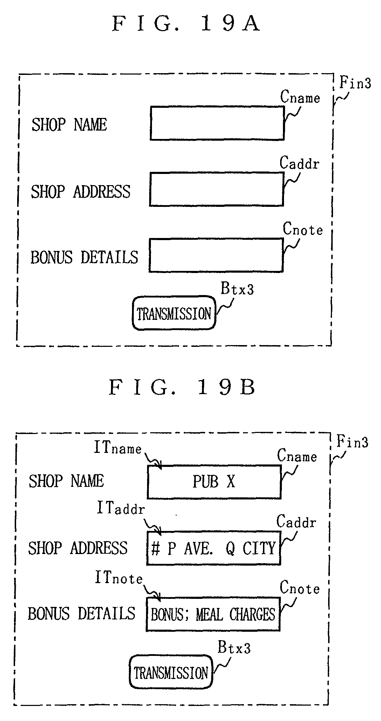

The form data storage 14₃ is typically composed of a hard disk drive, and stores form data *Dform3* in a storage location specified by a predetermined first URL (Uniform Resource Locator) . With the form data *Dform3,* such an input form *Fin3* as shown in FIG. 19A can be displayed at least by the data terminal equipment 2₃. The input form *Fin3* is so structured as to allow the shopkeeper using the data terminal equipment 2₃ to fill out items *IT,* which are needed to create the bonus-attached file *Fbonus3*. As to the items *IT,* to be filled out in the present embodiment are three of those *ITname, ITaddr,* and *ITnote* selected by the information provider. Specifically, the item *ITname* is a shop name, and the item *ITaddr* is a shop address. The item *ITnote* is details of a bonus, which denotes herein a merit awarded specially to the user who becomes the customer of the shop. With these three items *IT* selected, the input form *Fin3* is structured by three input columns *Cname, Caddr,* and *Cnote.* The shopkeeper using the data terminal equipment 2₃ fills out those input columns *Cname, Caddr,* and *Cnote* with, respectively, a shop name (item *ITname),* a shop address (item *ITaddr),* and bonus details (item *ITnote).*

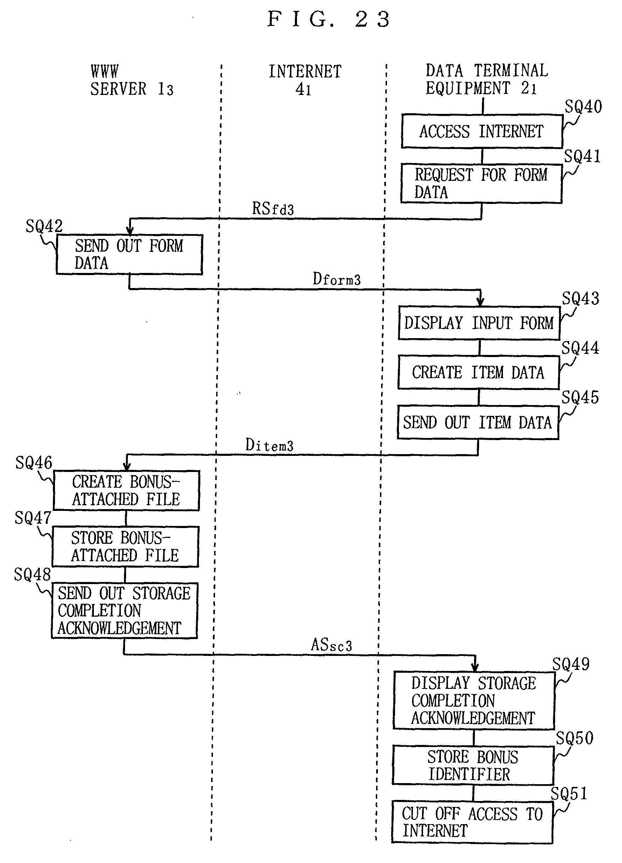

The input form *Fin3* has a transmission button *Btx3,* a function assigned to which is of transmitting the items *ITname, ITaddr,* and *ITnote* filled out in the input columns *Cname, Caddr,* and *Cnote* to the WWW server 1₃. The transmission button *Btx3* is clicked by the shopkeeper using the data terminal equipment 2₃. When the transmission button *Btx3* is clicked, the data terminal equipment 2₃ responsively transmits, to the WWW server 1₃, item data *Ditem3* (see sequence SQ44 of FIG. 23) including those inputted items *ITname, ITaddr,* and *ITnote.*

The bonus-attached file storage 15₃ stores the bonus-attached file *Fbonus3* (see FIG. 20B) in a storage location specified by a predetermined second URL. The bonus-attached file storage 15₃ also stores a base file *Fbase3* in a predetermined storage location. The base file *Fbase3* represents the background of the bonus-attached file *Fbonus3,* and is used when the WWW server 1₃ creates the bonus-attached file *Fbonus3* (see sequence SQ46 of FIG. 23). Here, the base file *Fbase3* is used only by the WWW server 1₃, and thus there is no need to assign a URL to the base file *Fbase3.*

The bonus-attached file *Fbonus3* is described in more detail. The bonus-attached file *Fbonus3* is created by the WWW server 1₃ using the item data *Ditem3* and base data *Fbase3* (see sequence SQ46 of FIG. 23). With the bonus-attached file *Fbonus3,* such shop details *INshop3* as shown in FIG. 20A can be displayed at least on the data terminal equipment 3₃ side. The bonus-attached file *Fbonus3* is written in POIX (Point Of Interest exchange language). Details of the POIX are found, as of January 26, 2001, in http://mostec.aplix.co.jp/poix.html or http://www.w3.org/TR/poix, and thus only any elements relating to the bonus-attached file *Fbonus3* are only described here.

The bonus-attached file *Fbonus3* is indicated by an element *poi*, and roughly composed of a shop name (referred to as a target in POIX), a representative shop position, and shop details. The shop name is indicated by an element *name,* and more specifically, written by a sub-element *nb.* The sub-element *nb* indicates the shop name in a specific form of <nb> shop name </nb>. The representative shop position is indicated by an element *point,* and more specifically, written by a sub-element *pos.* The sub-element pos indicates the representative shop position, which is defined by, at least, latitude and longitude. An element *lat* indicates the latitude of the representative shop position, in a specific form of <lat>latitude</lat>. An element *lon* indicates the longitude of the representative shop position, in a specific form of <lon>longitude</lon>. The shop details are indicated by an element *note*, and written by letter characters. The specific form of the element *note* is <note>bonus details</note>. In the present embodiment, the element *note* indicates in detail the bonus offered by the shop. Here, the element *note* may indicate the menu of the shop in addition to the bonus.

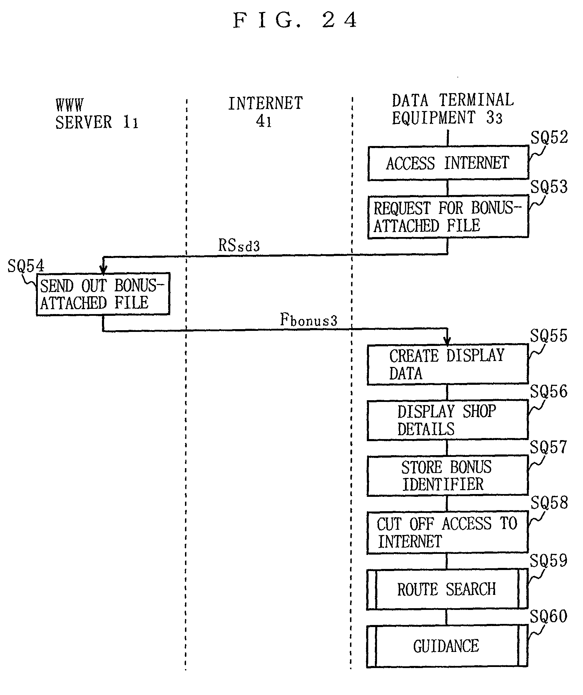

Assuming here is that the bonus-attached file *Fbonus3* includes such an element *poi* as shown in FIG. 20B, i.e., <nb> pub X</nb>, <lat>35.50</lat>, <lon>135.75</lon>, and <note>20% OFF on meal charges</note>. With such a bonus-attached file *Fbonus3*, displayed on the data terminal equipment 3₃ is the shop details *INshop3* of the pub X in FIG. 20A. Here, in the shop details *INshop3,* the representative shop position is at latitude 35.50° , and longitude 135.75°. However, for the user's easy understanding, the display shows the specific location of the pub X as its address (see sequences SQ55 and SQ56 of FIG. 24). As the bonus for the user visiting the pub X due to the shop details *INshop3,* displayed is "20% OFF on meal charges".

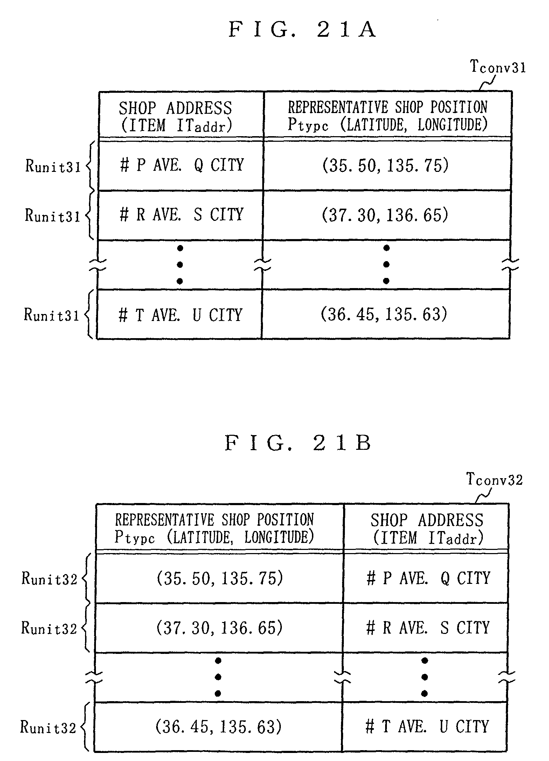

The conversion table storage 173 has such a conversion table *Tconv31* as shown in FIG. 21A. Specifically, the conversion table *Tconv31* is composed of a plurality of unit records *Runit31,* which are created on the basis of shop address, i.e., for every item *ITaddr.* The unit records *Runit31* each include the shop address (item *ITaddr*), and the set of latitude and the longitude indicating the representative position of the shop. Such a conversion table *Tconv31* is used when the WWW server 1₃ creates the bonus-attached file *Fbonus3* (see sequence SQ46 of FIG. 23). Here, the conversion table *Tconv31* is used only by the WWW server 1₃, and thus there is no need to assign a URL to the conversion table *Tconv31*.

Refer back to FIG. 17. The structure of the data terminal equipment 2₁ remains the same as described in the first embodiment, and thus is not described again.

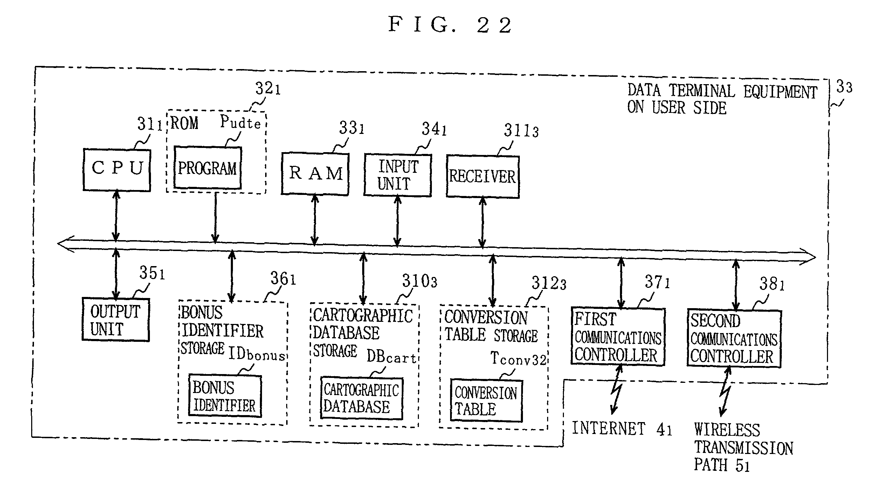

The data terminal equipment 3₃ is an information device which is typically structured as to be carried along by the user, i.e., the potential customer of the shop, and is provided with a navigation function. Such data terminal equipment 3₃ is typified by portable navigation devices. FIG. 22 shows the structure of the data terminal equipment 3₃. Compared with the data terminal equipment 3₁ of FIG. 5, the data terminal equipment 3₃ of FIG. 22 further includes, at least, a cartographic database storage 310₃, a receiver 311₃, and a conversion table storage 312₃. These are the only structural differences therebetween, and thus any constituent of FIG. 22 identical to that of FIG. 5 is provided with the same reference numeral, and not described again.

The cartographic database storage 310₃ stores a cartographic database *DBcart,* which is composed of several cartographic files. To each of the cartographic files, assigned is a predetermined area which is defined by latitude and longitude. The cartographic files each include image data for representing the area assigned thereto, and road network data for representing the road connections in the assigned area. The road network data is, schematically, structured by nodes and links. The nodes specify characteristic points (any of intersections, or curving points on roads) in the road network, while the links each denote a road between any two characteristics points.

The receiver 311₃ is typically composed of a GPS (Global Positioning System) receiver, and calculates the position of the data terminal equipment 3₃ based on position information transmitted from artificial satellites. The calculation result by the receiver 311₃ is defined by latitude and longitude, and transmitted to the CPU 311₁. Here, the GPS receiver is not restrictive to the receiver 311₃ as long as heteronomous navigation is realized thereby. Here, heteronomous navigation is an antonym of autonomous navigation, and means navigation by which the position of the data terminal equipment 3₃ being a mobile unit can be derived based on the position information provided by any other positioning systems.

The conversion table storage 312₃ stores such a conversion table *Tconv32* as shown in FIG. 21B. Specifically, the conversion table *Tconv32* is composed of several of a unit record *Runit32,* which is created for every representative position *Ptypc* of FIG. 21A. The unit record *Runit32* includes the representative position *Ptypc,* and the shop address (item *ITaddr).* Such a conversion table *Tconv32* is used by the data terminal equipment 3₃ for creating display data *Ddisp* (see sequence SQ55 of FIG. 24).

Thus described above are the structural differences between the data transmission system *Sdt*₁ and the data transmission system *Sdt*₃. By referring to FIGS. 23 and 24, described next is the differences between data communications in the data transmission system *Sdt*₁ and that in the data transmission system *Sdt*₃.

Referring to FIG. 23, described first is data communications between the WWW server 1₁ and the data terminal equipment 2₁. In FIG. 23, the shopkeeper operates the data terminal equipment 2₁ so as to request the information provider to create and store the bonus-attached file *Fbonus3* for his or her shop. At the time of such a request, the CPU 21₁ executes a process written in the program *Psdte* responding to the shopkeeper's operation. More specifically, the CPU 21₁ first accesses the Internet 4₁ (sequence SQ40).

Then, the shopkeeper enters a first URL through operation of the input unit 24₁. The CPU 21₁ generates on the RAM 23₁a request *RSfd3* including the first URL, and transfers it to the first communications controller 27₁. The request *RSfd3* is a signal for requesting the WWW server 1₃ to transmit the form data *Dform3* to the data terminal equipment 2₁. The first communications controller 27₁ sends out the received request *RSfd3* onto the Internet 4₁. As such, a request is made for the form data *Dform3* (sequence SQ41).

The request *RSfd3* is forwarded over the Internet 4₁ to the communications controller 16₁ in the WWW server 1₃, and then transferred to the RAM 13₁. After the request *RSfd3* is stored in the RAM 13₁, the CPU 11₁ executes a process written in the program *Psrvr.* Specifically, the CPU 11₁ extracts the first URL from the request *RSfd3* on the RAM 13₁, and then reads the form data *DForm3* from the storage location in the form data storage 14₃ which is specified by the first URL onto the RAM 13₁. Then, the CPU 11₁ transfers the form data *Dform3* on the RAM 13₁ to the communications controller 16₁, from which the form data *Dform3* is sent out onto the Internet 4₁ (sequence SQ42).

The form data *Dform3* is forwarded over the Internet 4₁ to the first communications controller 27₁ in the data terminal equipment 2₁, and then transferred to the RAM 23₁. The CPU 21₁ then transfers the form data *Dform3* on the RAM 23₁ to the output unit 25₁. The output unit 25₁ then performs a display process in accordance with the received form data *Dform3,* and displays on its screen such an input form *Fin3* as shown in FIG. 19A (sequence SQ43).

With the input form *Fin3* displayed, the shopkeeper fills, through operation of the input unit 241, the input columns *Cnames, Caddr,* and *Cnote* with the shop name (item *ITname*), the shop address (item *ITaddr*), and the bonus details (item *ITnote*). As exemplarily shown in FIG. 19A, the shopkeeper herein presumably fills out the input column *Cname* with the shop name "pub X", the input column *Cadds* with his or her shop address, and the input column *Cnote* with "20% OFF on meal charges" as bonus details. After completely filling out the input form *Fin3* as such, the shopkeeper clicks the transmission button *Btx3* through the input unit 24₁. Then, the CPU 21₁ creates on the RAM 23₁ the item data *Ditem3* including those inputted items *ITname, ITaddr,* and *ITnote* (sequence SQ44).

The CPU 21₁ then transfers the item data *Ditem3* on the RAM 23₁ to the first communications controller 27₁, from which the item data *Ditm3* is sent out onto the Internet 4₁ (sequence SQ45). The item data *Ditem3* is forwarded over the Internet 4₁ to the communications controller 16₁ in the WWW server 1₃, and then transferred to the RAM 13₁.

After the item data *Ditem3* is stored in the RAM 13₁, the CPU 11₁ creates the bonus-attached file *Fbonus3* (sequence SQ46). More in detail, the CPU 11₁ reads a base file *Fbase3* from the bonus-attached file storage 15₃ onto the RAM 13₁. Then, the CPU 11₁ retrieves the item *ITname* (shop name) from the item data *Ditem3* on the RAM 13₁ so as to create <nb>shop name</nb> using the element *nb.* As to the item *ITnote* (bonus details), the CPU 11₁ creates <note>bonus details</note> in the similar manner. The CPU 11₁ then retrieves the item *ITaddr* from the item data *Ditem3* on the RAM 13₁, and accesses to the conversion table *Tconv31* stored in the conversion table storage 17₃. Then, the CPU 11₁ searches for the unit record *Runit31* including the retrieved item *ITaddr* (shop address), and from thus found unit record *Runit31,* reads the representative position *Ptypc* onto the RAM 13₁. As to the latitude found in the representative position *Ptypc,* the CPU 11₁ creates <lat>latitude</lat> using the element *lat.* Similarly to the longitude found therein, created is <lon>longitude</lon> using the element *lon.*

The CPU 11₁ then allocates thus created <nb>shop name</nb>, <note>bonus details</note>, <lat>latitude</lat>, and <lon>longitude</lon> each onto the predetermined position on the background represented by the base file *Fbase3.* In this manner, a bonus-attached file *Fbonus3* is created on the RAM 13₁. After assigning the second URL to the bonus-attached file *Fbonus3* on the RAM 13₁, the CPU 11₁ stores it in the storage location of the bonus-attached file storage 15₃ which is specified by the second URL (sequence SQ47). As a result, the bonus-attached file *Fbonus3* becomes available in sequence SQ53 of FIG. 24 for the user's data terminal equipment 3₃ to request.

After sequence SQ47 is through, the CPU 11₁ generates a storage completion acknowledgement *ASsc3* including the second URL assigned to the current bonus-attached file *Fbonus3,* and transfers it to the communications controller 16₁. Here, together with the second URL, the storage completion acknowledgement *ASsc3* is a signal including also a message telling that the bonus-attached file *Fbonus3* is now stored in the bonus-attached file storage 15₃. The communications controller 16₁ sends out thus received storage completion acknowledgement *ASsc3* onto the Internet 4₁ (sequence SQ48).

The storage completion acknowledgement *ASsc3* is forwarded over the Internet 4₁ to the first communications controller 27₁ in the data terminal equipment 2₁, and then transferred to the RAM 23₁. The CPU 21₁ transfers the storage completion acknowledgement *ASsc3* thus stored in the RAM 23₁ to the output unit 25₁. The output unit 25₁ executes a display process in accordance with the received storage completion acknowledgement *ASsc3*, and then displays on its screen the message included in the storage completion acknowledgement *ASsc3* (sequence SQ49). This makes the shopkeeper acknowledge that his or her request is now processed by the information provider, i.e., the WWW server 1₃.

The CPU 21₁ then extracts the second URL from the storage completion acknowledgement *ASsc3* on the RAM 23₁, and stores it as the bonus identifier *IDbonus* in the bonus identifier storage 26₁ (sequence SQ50). The bonus identifier *IDbonus* is an identifier for uniquely identifying the bonus included in the bonus-attached file *Fbonus3.* Here, the bonus identifier *IDbonus* stored in sequence SQ50 is now referred to as an internal bonus identifier *IDbonus*'. The internal bonus identifier *IDbonus'* is used in sequence SQ22 of FIG. 8 which will be described below, and thus is not described in detail now. Here, the timing for sequence SQ50 is not restrictive as long as it is carried out after the storage completion acknowledgement *ASsc3* is stored in the RAM 23₁, and before sequence SQ22.

After sequence SQ50, the CPU 21₁ cuts off the access to the Internet 4₁ (sequence SQ51).

In the above, sequences SQ40 to SQ51 are presumed to be gone through successively for convenience. This is not restrictive, and after sequence SQ45 is through, the CPU 21₁ may cut off access to the Internet 4₁ for a time. This is because, as described in the first embodiment, it may take time to create the bonus-attached file *Fbonus3,* and if so, the shopkeeper may have to wait long, and may be charged for extra communications expenses. If this is the case, the WWW server 1₃ preferably transmits an e-mail including the same message and the second URL as in the storage completion acknowledgement *ASsc3* to the data terminal equipment 2₁. Thereby, the shopkeeper can read the message and know the second URL as the bonus identifier *IDbonus* whenever convenient, shortening waiting time and reducing communications expenses.

Referring to FIG. 24, described next is data communications between the WWW server 1₁ and the data terminal equipment 3₃. Through operation of data terminal equipment 3₁ carrying along, the user browses the bonus-attached file *Fbonus3* on the WWW server 1₁. During such browsing, the CPU 31₁ executes a process written in the program *Pudte* responding to the user's operation. More specifically, the CPU 31₁ accesses the Internet 4₁ (sequence SQ52).

Then, the user operates the input unit 34₁ to enter the second URL. The CPU 31₁ generates on the RAM 33₁ a request *RSsd3* including the second URL, and transfers it to the first communications controller 37₁. Here, the request *RSsd3* is a signal for requesting the WWW server 1₁ to forward the bonus-attached file *Fbonus3* to the data terminal equipment 3₃. The first communications controller 37₁ sends out the received request *RSsd3* onto the Internet 4₁, As such, a request is made for the bonus-attached file *Fbonus3* (sequence SQ53).

The request *RSsd3* is then stores in the RAM 13₁ via the communications controller 16₁ in the WWW server 1₁. In response, the CPU 11₁ reads the bonus-attached file *Fbonus3* from the storage location of the bonus-attached file storage 15₃, and transfers it to the communications controller 16₁. Here, the storage location in the bonus-attached file storage 15₃ is specified by the second URL in the request *RSsd3.* The communications controller 16₁ sends out the received bonus-attached file *Fbonus3* onto the Internet 4₁ (sequence SQ54).

The bonus-attached file *Fbonus3* is stored in the RAM 33₁ via the Internet 4₁, and the first communications controller 37₁ in the data terminal equipment 3₃. Then, based on the bonus-attached file *Fbonus3* on the RAM 33₁, the CPU 31₁ creates display data *Ddisp* (sequence SQ55). More specifically, the CPU 31₁ extracts the representative position *Ptypc* from the bonus-attached file *Fbonus3* on the RAM 33₁, and accesses to the conversion table *Tconv32* (see FIG. 21B) stored in the conversion table storage 312₃. Then. the CPU 31₁ searches for the unit record *Runit32* including thus extracted representative position *Ptypc* (latitude and longitude) , and from the found unit record *Runit32,* reads the shop address (item *ITaddr)* onto the RAM 13₁. The CPU 11₁ then replaces <lat>latitude</lat> and <lon>longitude</lon> in the bonus-attached file *Fbonus3* with the shop address (item *ITaddr*), whereby a single piece of display data *Ddisp* is created on the RAM 13₁.

The display data *Ddisp* on the RAM 33₁ is transferred to the output unit 35₁ by the CPU 31₁. The output unit 35₁ then executes a display process in accordance with the received display data *Ddisp* so as to display an image representing the shop details *INshop3* (sequence SQ56). This allows the user to browse the shop details *INshop3.* Assuming here that the user browses the shop details *INshop3* of FIG. 20A.

After sequence SQ55, if the user decides to go to the displayed shop and wants to get the bonus of the shop, he or she instructs as such through operation of the input unit 34₁. In response thereto, the CPU 31₁ stores in the bonus identifier storage 36₁ the second URL of the current bonus-attached file *Fbonus3* as the bonus identifier *IDbonus* (sequence SQ57). Here, the bonus identifier *IDbonus* stored in sequence SQ56 is now referred to as an external bonus identifier *IDbonus".* The external bonus identifier *IDbonus"* is the one used in sequence SQ22 of FIG. 22 below, and is not described here in detail.

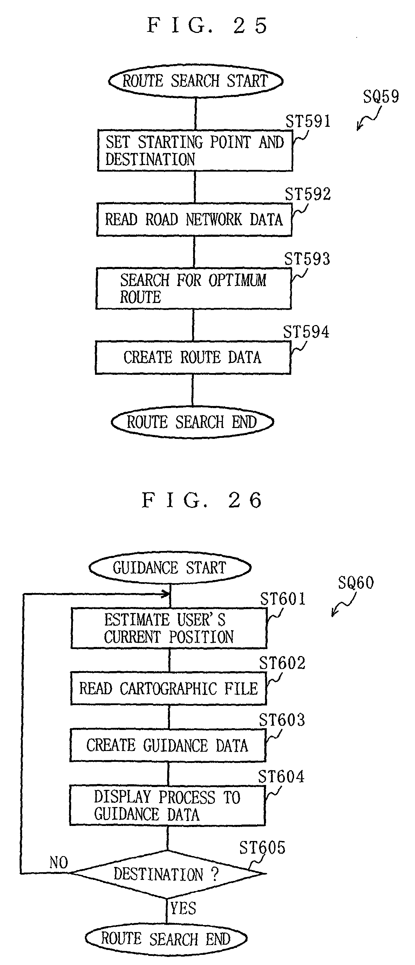

After sequence SQ57, the CPU 31₁ cuts off access to the Internet 4₁ (sequence SQ58), and then determines that the user as heading for the target shop, and thus starts to search for a route from the user's current position to the shop (Sequence SQ59). Here, the target shop is the one in the currently received bonus-attached file *Fbonus3.* Referring to the flowchart of FIG. 25, the procedure of sequence SQ59 is described more specifically.

In FIG. 25, the CPU 31₁ sets a starting point and a destination of a route to be searched (step ST591). As a specific example of step ST591, the CPU 31₁ receives the calculation result from the receiver 311₃, and then sets the latitude and the longitude indicated thereby as the starting point. Then, the CPU 31₁ extracts the latitude and longitude indicated by the representative position *Ptypc* from the bonus-attached file *Fbonus3.* Alternatively, the user designates the starting point through operation of the input unit 34₁. The CPU 31₁ sets thus designated starting point as it is. Even if so, the destination is the one defined by latitude and longitude indicated by the representative position *Ptypc* extracted from the bonus-attached file *Fbonus3.*

After step ST591 is through, the CPU 31₁ reads, from the cartographic database *DBcart* in the cartographic database storage 310₃ to the RAM 33₁, the road network data of an area needed in the next step ST593 (step ST592). Read in step ST592 is the road network data of a rectangular region including both the starting point and the destination set in step ST581.

The CPU 31₁ then searches for an optimum route from the starting point to the destination using the road network data read in step ST592 (step ST593). To be more specific, the optimum route is derived by using a route selection algorithm typified by the Dijkstra's algorithm, and typically is a route which allows the user to reach his or her destination in the shortest time or distance. The CPU 31₁ creates route data representing, by nodes and links, the optimum route derived in step ST593 (step ST594). This is the end of the process of FIG. 25, and the procedure now goes to a user's guidance process of FIG. 24 (sequence SQ60). Referring to the flowchart of FIG. 26, the detailed procedure of sequence SQ60 is next described.

In FIG. 26, the CPU 31₁ receives the calculation result from the receiver 311₃, and estimates the latitude and longitude found therein as the user's current position (step ST601). Here, as is well known, the position information transmitted from artificial satellites previously includes an error, and thus it is preferable for the CPU 31₁ to correct those latitude and longitude based on correction information transmitted from a base station accommodated in D-GPS (Differential GPS). If this is the case, the data terminal equipment 3₁ requires a receiver specifically for the D-GPS. To be prepared for a case where the position information from artificial satellites cannot be received, the data terminal equipment 3₁ is preferably provided with a sensor for autonomous navigation. In the case where the data terminal equipment 3₁ is specifically designed for vehicles, typified example as a sensor for autonomous navigation is a vehicle-speed sensor or a gyro compass. If the data terminal equipment 3₁ is designed to be carried along (not for vehicles), a pedometer or an azimuth sensor is a typical sensor for autonomous navigation.

After step ST601, the CPU 31₁ reads, from the cartographic database *DBcart in* the cartographic database storage 310₃ to the RAM 33₁, the cartographic file for the area around the user's current position (step ST602). For convenience, the cartographic file reading is presumably never failed to be done after step ST601. This is not restrictive, and procedure may skip step ST602 as required.

Next, the CPU 31₁ creates guidance data (step ST603). More in detail, the CPU 31₁ rips one specific cartographic file on the RAM 33₁ for the display process on the output unit 35₁ this time. As to thus ripped cartographic file, the CPU 31₁ then applies a rendering process using a frame memory which is reserved in RAM 33₁, and creates intermediate image data representing the map to be displayed. From the route data derived in sequence SQ59, the CPU 31₁ creates an object representing the route to the destination (the target shop) from the current position estimated in step ST601. The CPU 31₁ then blends to the intermediate image data the route object and an object representing a pointer pointing the user's current position together, thereby creating the guidance data. The guidance data represents an image resultantly derived by merging the user's current position and the route to the destination on the map to be displayed, and is transferred from the frame memory (RAM 33₁) to the output unit 35₁. The output unit 35₁ then performs the display process in accordance with the received guidance data, and displays on its screen the map onto which the user's current position and the route to the destination are merged (step ST604).

Then, the CPU 31₁ determines whether the user's current position is the same as the destination (step ST605). If no, the CPU 31₁ determines that the user does not yet reach the target shop, i.e., destination, and the procedure returns to step ST601 to repeats steps ST601 to ST604. On the other hand, if the user's current position is the same as the destination, the CPU 31₁ determines that the user has reached the destination, and this is the end of the process of FIG. 26, and data communications of FIG. 24 is terminated.

After such a guidance process is through, the user gets services from the target shop, make purchases thereat, and receives the corresponding bonus. To receive the bonus, the data terminal equipment 2₁ and 3₃ performs therebetween such data communications as shown in FIG. 8, which is not described again.

As described above, with the data transmission system *Sdt*₃, the user can receive a bonus from the corresponding shop as with the data transmission system *Sdt*₁. Further, the data terminal equipment 33 can make a guidance for the user to the target shop. In this sense, the data transmission system *Sdt*₃ has better usability.

If the data terminal equipment 3₁ is so designed as to be carried along (not for vehicles), in step ST593, not only searching for an optimum route from the starting point to the destination, if the user needs to use any public transportation such as trains, any helpful information may be displayed, i.e., timetable information about a station closest to the starting point or the destination, train type (e.g., express, local) to take, estimated time for reaching the closest station or the destination, the estimated time taken to the destination, the fare to the destination.

The data terminal equipment 3₁ may execute a process of making a reservation at the shop after searching for the optimum route from the starting point to the destination. Further, if noticing that the user may not be at the destination at the estimated time, or be at the shop in time before the reservation time, the data terminal equipment 3₁ may notify the user as such through display. In such a case, the data terminal equipment 3₁ may also executes a process of canceling the reservation or changing the reservation time.

The data transmission systems *Sdt*₃ and *Sdt*₂ may be combined together, and therewith, the user may receive services from the shop, or make purchases thereat with no cash payment.

In the third embodiment, a single data terminal equipment 2₃ is presumed for convenience to perform both data communications of FIGS. 23 and 8. This is not restrictive, and two of the data terminal equipment 2₃ physically differed from each other may be provided, and one may be in charge of data communications of FIG. 23, and the other data communications of FIG. 8.

Also, in the above, in the case where the data terminal equipment 3₃ guides the user to the shop, the data terminal equipment 2₃ on the shop side may provide the user any bonus which is considered better than the one in the bonus-attached file *Fbonus3*.

Also in the above, responding to the request *RSsd3* from the data terminal equipment 3₃, the WWW server 1₁ may search for any bonus-attached file *Fbonus3* whose bonus is most advantageous for the user, and the found bonus-attached file *Fbonus3* may be forwarded back to the data terminal equipment 3₃.

While the invention has been described in detail, the foregoing description is in all aspects illustrative and not restrictive. It is understood that numerous other modifications and variations can be devised without departing from the scope of the invention.

## Claims

1. A data transmission system in which data communications is performed between first data terminal equipment (2₁) placed on a bonus awarding side, and second data terminal equipment (3₁) used by a user who is entitled to receive the bonus,
said first data terminal equipment comprising:
a first bonus identifier storage (26₁) for storing, as an internal bonus identifier, a bonus identifier provided to uniquely identify the bonus awarded to said second data terminal equipment,
said second data terminal equipment comprising:
a bonus-attached file requesting part (31₁) for requesting a bonus-attached file which is for the bonus, and including a bonus identifier which uniquely identifies the bonus; and
a second bonus identifier storage (36₁) for storing, as an external bonus identifier, the bonus identifier included in the bonus-attached file requested by said bonus-attached file requesting part, and
said first data terminal equipment further comprising:
a bonus identifier requesting part (21₁) for requesting, through data communications with said second data terminal equipment, the external bonus identifier stored in said second bonus identifier storage;
a determination part (21₁) for determining whether or not the external bonus identifier requested by said bonus-identifier requesting part is the same as the internal bonus identifier stored in said first bonus identifier storage; and
a bonus awarding part (21₁) for providing, when said determination part determines that the external bonus identifier as being the same as the internal bonus identifier, said second data terminal equipment with the bonus specified by the internal bonus identifier.

2. The data transmission system according to claim 1, further comprising a server (1₁) for performing data communications at least with said second data terminal equipment, wherein
said server comprises:
a bonus-attached file storage (15₁) for storing said bonus-attached file therein; and
a bonus-attached file transmitter (16₁) for reading the bonus-attached file requested by said bonus-attached file requesting part from said bonus-attached file storage, and transmitting the file to said second data terminal equipment, wherein
said second bonus identifier storage stores, as the external bonus identifier, the bonus identifier included in the bonus-attached file transmitted from said bonus-attached file transmitter.

3. The data transmission system according to claim 1, wherein
said server further comprises a form data storage (14₁) for storing form data by which an item needed for creating said bonus-attached file can be inputted,
said first data terminal equipment further comprises a form data requesting part (21₁) for requesting, through data communications with said server, the form data in said form data storage,
said server further comprises a form data transmitter (16₁) for reading the form data from said form data storage responding to a request from said form data requesting part, and transmitting the data to said first data terminal equipment, and
said first data terminal equipment further comprises:
an item data creation part (21₁) for creating item data including the item inputted based on the form data transmitted from said form data transmitter; and
an item data transmitter (27₁) for transmitting the item data created by said item data creation part to said server, wherein
said server creates the bonus-attached file based on the item data transmitted from said item data transmitter.

4. The data transmission system according to claim 3, wherein
said form data is previously created to allow, at least, the bonus and the bonus identifier to be inputted on said first data terminal equipment side,
said item data creation part creates the item data based on the bonus and the bonus identifier inputted by the bonus awarding side, and
said first bonus identifier storage stores, as the internal bonus identifier, the bonus identifier inputted by said bonus awarding side.

5. The data transmission system according to claim 1, wherein
said first data terminal equipment stores said bonus-attached file, and transmits the bonus-attached file requested by said bonus-attached file requesting part to said second data terminal equipment, and
said second bonus identifier storage stores, as the external bonus identifier, the bonus identifier included in the bonus-attached file transmitted from said bonus-attached file transmitter.

6. The data transmission system according to claim 1, further comprising a server (1₁) for performing data communications with said first and said second data terminal equipment,
said first data terminal equipment further comprises a bonus-attached file upload part (21₁) for uploading, to said server, the bonus-attached file created by said bonus awarding side,
said server comprises:
a bonus-attached file storage (15₁) for storing the bonus-attached file uploaded by said bonus-attached file upload part; and
a bonus-attached file transmitter (16₁) for reading the bonus-attached file requested by said bonus-attached file requesting part from said bonus-attached file storage, and transmitting the file to said second data terminal equipment, wherein
said second bonus identifier storage stores, as the external bonus identifier, the bonus identifier included in the bonus-attached file transmitted from said bonus-attached file transmitter.

7. The data transmission system according to claim 1, further comprising a center station for charging, through data communications with said first data terminal equipment, said user if he or she receives a paid service or make a purchase on the bonus awarding side.

8. The data transmission system according to claim 1, wherein
said bonus-attached file further includes a representative position of the bonus awarding side, and
said second data terminal equipment further comprises:
a route search part (31₁) for searching for an optimum route from a starting point designated by said user to said bonus awarding side based on the representative position included in the bonus-attached file requested by said bonus-attached file requesting part; and
a guidance part (37₁) for guiding said user to said bonus awarding side in accordance with the optimum route found by said route search part.

9. A data transmission method in which data communications is performed between first data terminal equipment placed on a bonus awarding side, and second data terminal equipment used by a user who is entitled to receive the bonus,
said first data terminal equipment comprising:
a first bonus identifier storage step (SQ6) of storing, as an internal bonus identifier, a bonus identifier provided to uniquely identify the bonus awarded to said second data terminal equipment,
said second data terminal equipment comprising:
a bonus-attached file requesting step (SQ14) of requesting a bonus-attached file which is for the bonus, and including a bonus identifier which uniquely identifies the bonus; and
a second bonus identifier storage step (SQ17) of storing, as an external bonus identifier, the bonus identifier included in the bonus-attached file requested in said bonus-attached file requesting step, and
said first data terminal equipment further comprising:
a bonus identifier requesting step (SQ20) of requesting, through data communications with said second data terminal equipment, the external bonus identifier stored in said second bonus identifier storage step;
a determination step (SQ22) of determining whether or not the external bonus identifier requested in said bonus-identifier requesting step is the same as the internal bonus identifier stored in said first bonus identifier storage step; and
a bonus awarding step (SQ23) of providing, when said determination step determines that the external bonus identifier as being the same as the internal bonus identifier, said second data terminal equipment with the bonus specified by the internal bonus identifier.

10. A computer program for data transmission in which data communications is performed between first data terminal equipment placed on a bonus awarding side, and second data terminal equipment used by a user who is entitled to receive the bonus,
said computer program comprising:
a first bonus identifier storage step (SQ6) of storing, by said first data terminal equipment, a bonus identifier provided to uniquely identify the bonus awarded to said second data terminal equipment, as an internal bonus identifier;
a bonus-attached file requesting step (SQ14) of requesting, by said second data terminal equipment, a bonus-attached file which is for the bonus, and including a bonus identifier which uniquely identify the bonus;
a second bonus identifier storage step (SQ17) of storing, by said second data terminal equipment, the bonus identifier included in the bonus-attached file requested in said bonus-attached file requesting step as an external bonus identifier;
a bonus identifier requesting step (SQ20) of requesting, by said first data terminal equipment, through data communications with said second data terminal equipment, the external bonus identifier stored in said second bonus identifier storage step;
a determination step (SQ22) of determining, by said first data terminal equipment, whether or not the external bonus identifier requested in said bonus-identifier requesting step is the same as the internal bonus identifier stored in said first bonus identifier storage step; and
a bonus awarding step (SQ23) of providing, by said first data terminal equipment, when said determination step determines that the external bonus identifier as being the same as the internal bonus identifier, said second data terminal equipment with the bonus specified by the internal bonus identifier.

11. The computer program according to claim 10, wherein said computer program is recorded on a recording medium.

12. Data terminal equipment (3₁) connected with external data terminal equipment placed on a bonus awarding side for communications therewith, and used by a user who is entitled to receive the bonus, wherein
said external data terminal equipment stores, as an external bonus identifier, a bonus identifier provided to uniquely identify the bonus awarded to said data terminal equipment,
said data terminal equipment comprises:
a bonus-attached file requesting part (31₁) for requesting a bonus-attached file which is for the bonus, and including a bonus identifier which uniquely identifies the bonus; and
a bonus identifier storage (36₁) for storing, as an internal bonus identifier, the bonus identifier included in the bonus-attached file requested by said bonus-attached file requesting part, and
said external data terminal equipment
requests, through data communications with said second data terminal equipment, the internal bonus identifier stored in said second bonus identifier storage,
determines whether or not the internal bonus identifier requested by said bonus-identifier requesting part is the same as the external bonus identifier stored in itself, and
provides, when the internal bonus identifier is determined as being the same as the external bonus identifier, said data terminal equipment with the bonus specified by the internal bonus identifier.

13. Data terminal equipment (2₁) connected with external data terminal equipment used by a user who is entitled to receive the bonus for data communications therewith, comprising:
a bonus identifier storage (26₁) for storing, as an internal bonus identifier, a bonus identifier provided to uniquely identify the bonus awarded to said external data terminal equipment, wherein
said external data terminal equipment
requests for a bonus-attached file which is for the bonus, and including a bonus identifier which uniquely identifies the bonus, and
stores, as an external bonus identifier, the bonus identifier included in the requested bonus-attached file, and
said data terminal equipment further comprises:
a bonus identifier requesting part (21₁) for requesting the external bonus identifier stored in said external bonus identifier storage;
a determination part (21₁) for determining whether or not the external bonus identifier requested by said bonus-identifier requesting part is the same as the internal bonus identifier stored in said first bonus identifier storage; and
a bonus awarding part (21₁) for providing, when said determination part determines that the external bonus identifier as being the same as the internal bonus identifier, said external data terminal equipment with the bonus specified by the internal bonus identifier.
